# EUROPEAN PATENT SPECIFICATION

(11) **EP 2 503 678 B1**
(45) Date of publication and mention of the grant of the patent: **03.12.2014**
(21) Application number: 12161340.0
(22) Date of filing: 26.03.2012
(51) Int. Cl.: H02K 35/02

(54) **Power storage device of vibration type power generation equipped with inner columnar and outer annular magnetic motion block**
Energiespeichervorrichtung basierend auf Energieerzeugung durch Vibration, ausgerüstet mit innerem säulenförmigem und äußerem ringförmigem, magnetischem Bewegungsblock
Dispositif de stockage d'énergie de génération de puissance de type à vibration équipé d'une colonne intérieure et bloc de mouvement magnétique annulaire externe

(30) Priority: 25.03.2011 US 201113071627
(43) Date of publication of application: 26.09.2012
(73) Proprietor: Yang, Tai-Her, Dzan-Hwa (TW)
(72) Inventor: Yang, Tai-Her, Dzan-Hwa (TW)
(74) Representative: Wright, Howard Hugh Burnby

(56) References cited:
- EP-A1- 1 737 120
- CN-A- 101 510 717
- CN-U- 201 656 734
- CN-U- 201 690 339
- JP-A- S 614 456
- JP-A- S58 165 657
- US-A1- 2004 100 344
- US-B1- 7 675 202
- KRAUSE W ET AL: "ANTRIEBSSYSTEME FUER AUTOMATEN DER KLEINTEILMONTAGE", TECHNISCHE RUNDSCHAU, HALLWAG AG, CH, vol. 89, no. 14, 4 April 1997 (1997-04-04) , pages 26-30, XP000659713, ISSN: 1023-0823

## Description

### BACKGROUND OF THE INVENTION

### (a) Field of the Invention

The present invention is a novel design for the power storage device of axial vibration type power generation, wherein the outer end of the location where the columnar magnet passing the annular power generation coil set being installed with an outer magnetic conductive member for reducing the magnetic resistance generated while the magnetic poles at two ends of the columnar magnet passing the annular power generation coil set, the columnar magnet and the outer magnetic conductive member are jointly combined to a motion block assembly (106) for generating synchronous axial displacement so as to pass the annular power generation coil set, and enable the annular power generation coil set to generate electric power based on the Lenz's Law, and the electric energy is stored in a power storage device through a rectifying and charging circuit, and installed with an anode output/input terminal and a cathode output/input terminal of power storage device for serving as electric energy output/input interfaces.

### (b) Description of the Prior Art

The conventional axial vibration type power generator utilizes a round columnar magnet being axially coupled with an annular power generation coil set for performing axial vibrating displacement, so that the power generation coil set is enabled to generate electric power based on the Len's Law. However, the coupling magnetic lines of the columnar magnet and the annular power generation coil set are transmitted through air, thereby the magnetic resistance is relatively larger, and the voltage of the generated electric power is therefore lowered, and power storage is not sufficient.

CN101510717 discloses a motor device, which comprises a solenoid coil, a magnet, a sensor, a control circuit and the like. The motor device can apply work with the electro-magnetic force between the solenoid coil and the magnet, which can not only fully take use of the attraction of the magnetic field to apply work but also exploit the repelling force to apply work, thus significantly improving the torque and efficiency of the motor and lead the motor to have simple structure and low cost.

### SUMMARY OF THE INVENTION

The present invention is installed with a columnar magnet in a round columnar shape and having different magnetic poles in the axial direction, and an outer magnetic conductive member enclosing at the exterior thereof, the above two are combined to a motion block assembly (106) and coaxially adjacent disposed for structuring a magnetic path for performing the synchronous axial displacement, and the outer diameter of the columnar magnet is smaller than the inner diameter of the outer magnetic conductive member and formed with an annular gap allowing an annular power generation coil set to pass therebetween, thereby when the above two axially perform relative reciprocal axial displacing vibrations, the annular power generation coil set is enabled to generate electric power based on the Lenz Law, and the electric energy is stored in a power storage device through a rectifying and charging circuit, and installed with an anode output/ input terminal and a cathode output/input terminal of power storage device for serving as electric energy output/input interfaces.

According to the present invention power storage type reciprocal vibration power generators according to claims 1-3 are provided.

### BRIEF DESCRIPTION OF THE DRAWINGS

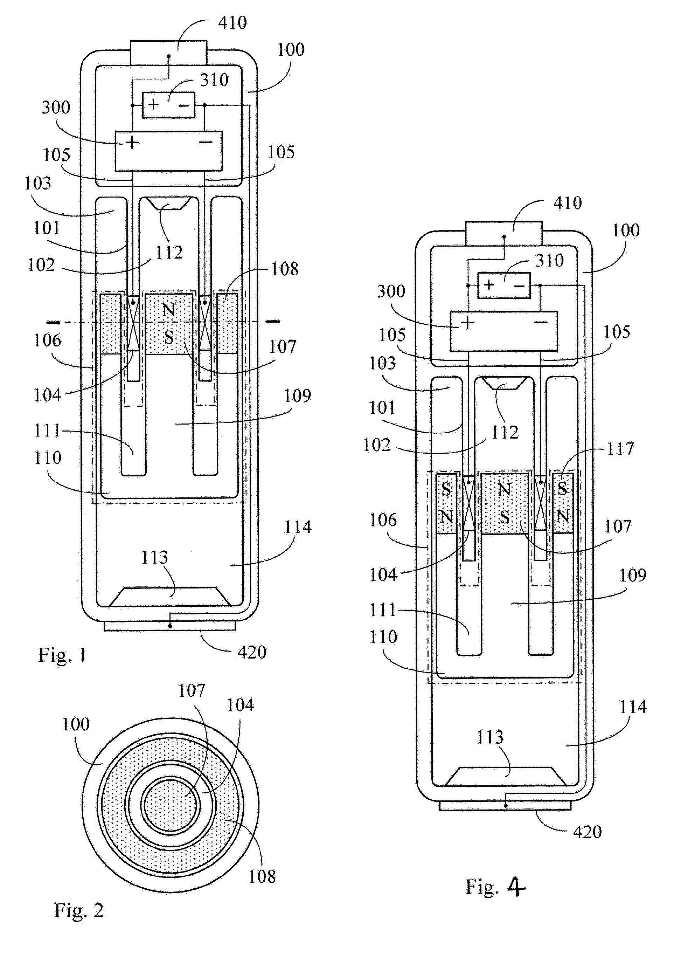

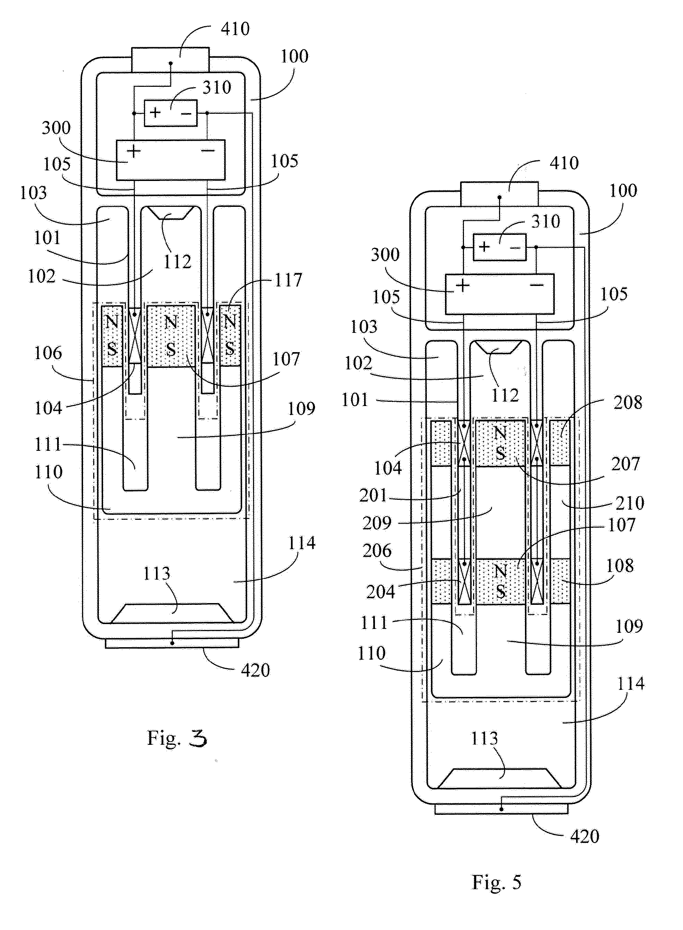

FIG. 1 is a schematic structural view showing the power storage device wherein the interior of the annular power generation coil set (104) being coupled with the columnar magnet (107), and the exterior thereof being coupled with the outer magnetic conductive member (108), according to one embodiment of the present invention. FIG. 2 is a cross view of FIG. 1. FIG. 3 is a schematic structural view showing the power storage device wherein the interior of the annular power generation coil set (104) being coupled with the columnar magnet (107), and the exterior thereof being coupled with the outer magnet (117) relatively installed in the same polarity with the columnar magnet (107), according to one embodiment of the present invention. FIG. 4 is a schematic structural view showing the power storage device wherein the interior of the annular power generation coil set (104) being coupled with the columnar magnet (107), and the exterior thereof being coupled with the outer magnet (117) relatively installed in different polarities to the columnar magnet (107), according to one embodiment of the present invention. FIG. 5 is a schematic structural view showing the power storage device wherein the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnetic conductive members (108), (208), according to one embodiment of the preset invention.

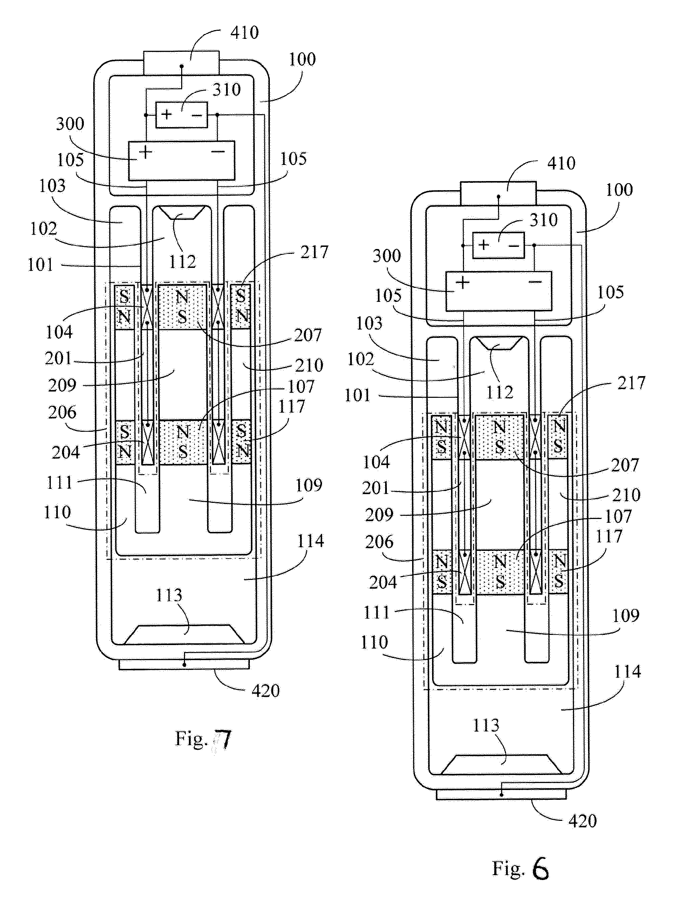

FIG. 6 is a schematic structural view showing the power storage device wherein the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnets (117), (217) arranged in the multiple segment format and relatively installed in the same polarity with the columnar magnet (107), according to one embodiment of the preset invention.

FIG. 7 is a schematic structural view showing the power storage device wherein the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnets (117), (217) arranged in the multiple segment format and relatively installed in different polarities to the columnar magnet (107), according to one embodiment of the preset invention.

### DESCRIPTION OF MAIN COMPONENT SYMBOLS

(100) : Housing
(101) : Tubular annular coil set seat
(102) : Round space
(103) : Annular space
(104) , (204) : Annular power generation coil set
(105) : Output wire
(106) , (206) : Motion block assembly
(107) , (207) : Columnar magnet
(108) , (208) : Outer magnetic conductive member
(109) , (209) : Center column of motion block
(110) : Cup-shaped structure of motion block
(111) : Inner annular space of motion block
(112) : First buffer member
(113) : Second buffer member
(114) : Cylindrical space inside the housing
(117) , (217) : Outer magnet
(201) : Tubular annular coil set partition seat
(210) : Cup-shaped structure partition ring
(300) : Rectifying and charging circuit
(310) : Power storage device
(410) : Anode output/input terminal
(420) : Cathode output/input terminal

### DETAILED DESCRIPTION OF THE PREFERRED EMBODIMENTS

The conventional axial vibration type power generator utilizes a round columnar magnet being axially coupled with an annular power generation coil set for performing axial vibrating displacement, so that the power generation coil set is enabled to generate electric power based on the Len's Law. However, the coupling magnetic lines of the columnar magnet and the annular power generation coil set are transmitted through air, thereby the magnetic resistance is relatively larger, and the voltage of the generated electric power is therefore lowered, and power storage is not sufficient.

The present invention is installed with a columnar magnet in a round columnar shape and having different magnetic poles in the axial direction, and an outer magnetic conductive member enclosing at the exterior thereof, the above two are combined to a motion block assembly (106) and coaxially adjacent disposed for structuring a magnetic path for performing the synchronous axial displacement, and the outer diameter of the columnar magnet is smaller than the inner diameter of the outer magnetic conductive member and formed with an annular gap allowing an annular power generation coil set to pass therebetween, thereby when the above two axially perform relative reciprocal axial displacing vibrations, the annular power generation coil set is enabled to generate electric power based on the Lenz's Law, and the electric energy is stored in a power storage device through a rectifying and charging circuit, and installed with an anode output/input terminal and a cathode output/input terminal of power storage device for serving as electric energy output/input interfaces.

The present invention is a novel design for the power storage device of axial vibration type power generation, wherein the outer end of the location where the columnar magnet passing the annular power generation coil set being installed with an outer magnetic conductive member for reducing the magnetic resistance generated while the magnetic poles at two ends of the columnar magnet passing the annular power generation coil set, the columnar magnet and the outer magnetic conductive member are jointly combined to a motion block assembly (106) for generating synchronous axial displacement so as to pass the annular power generation coil set, and enable the annular power generation coil set to generate electric power based on the Lenz's Law, and the electric energy is stored in a power storage device through a rectifying and charging circuit, and installed with an anode output/input terminal and a cathode output/input terminal of power storage device for serving as electric energy output/input interfaces.

FIG. 1 is a schematic structural view showing the power storage device wherein the interior of the annular power generation coil set (104) being coupled with the columnar magnet (107), and the exterior thereof being coupled with the outer magnetic conductive member (108), according to one embodiment of the present invention;

FIG. 2 is a cross view of FIG. 1;

As shown in FIG. 1 and FIG. 2, it mainly consists of:
--Housing (100): which is constituted by a material having poor magnetic conduction and poor electric conduction, formed in a hollow cylindrical shape and one inner end inwardly extended with a tubular annular coil set seat (101) with its distal end being extended for connecting to the annular power generation coil set (104), and an annular space (103) is formed between the tubular annular coil set seat (101) and the inner hole of the housing (100), and the center of the tubular annular coil set seat (101) is formed with a round space (102), and the annular power generation coil set (104) is installed with an output wire (105) for outputting the electric power generated by the annular power generation coil set (104) to a rectifying and charging circuit (300), then output to the anode terminal of a power storage device (310) from the output end of the rectifying and charging circuit (300), and then output to an anode output/input terminal (410) and a cathode output/input terminal (420) installed in the housing (100) from the anode terminal of the power storage device (310);
--Motion block assembly (106): which is constituted by a material having poor magnetic conduction and poor electric conduction, and is provided with a cup-shaped structure of motion block (110) for combining with the outer magnetic conductive member (108), and the center of the cup-shaped structure of motion block (110) is provided with a center column of motion block (109) for combining with the columnar magnet (107), and the periphery of the central column of motion block (109) and the cup-shaped structure of motion block (110) form an inner annular space of motion block (111) for being sleeved and combined with the annular power generation coil set (104) and the tubular annular coil set seat (101) and allowing the mentioned two to perform relative axial displacement, and the round space (102) of the tubular annular coil set seat (101) is provided for being sleeved and combined with the columnar magnet (107) and the center column of motion block (109) and allowing the mentioned two to perform relative axial displacement;
--A first buffer member (112) is installed between the round space (102) of the tubular annular coil set seat (101) and the inner wall of the housing (100) for serving as a buffer while the center column (109) and the columnar magnet (107) of the motion block assembly (106) and the outer magnetic conductive member (108) perform axial displacement;
-- The mentioned columnar magnet (107) is provided for when performing the axial reciprocal vibration with the outer magnetic conductive member (108) to pass through the annular power generation coil set (104), enabling the annular power generation coil set (104) to generate a power generation effect;
--Rectifying and charging circuit (300): which is constituted by electromechanical and solid electronic components and rectifying devices, and provided for rectifying the electric power generated by the annular power generation coil set (104) then inputting the electric power to the power storage device (310);
--Power storage device (310): which is constituted by a rechargeable secondary battery or ultra capacitor or capacitor, and provided for storing the electric power from the rectifying and charging circuit (300) or the electric power inputting from the anode output/input terminal (410) and the cathode output/input terminal (420);
--Anode output/input terminal (410): which is constituted by electric conductive terminal head or terminal or plug or socket structure, and installed in the housing (100) and connected to the anode terminal of the rectifying and charging circuit (300) for outputting or inputting electric energy to the exterior;
--Cathode output/input terminal (420): which is constituted by electric conductive terminal head or terminal or plug or socket structure, and installed in the housing (100) and connected to the cathode terminal of the rectifying and charging circuit (300) for outputting or inputting electric energy to the exterior;
--The cylindrical space (114) inside the housing (100) is provided for being sleeved with the outer periphery of the motion block assembly (106) and allowing the relative axial displacement, and a second buffer member (113) is installed between the motion block assembly (106) and the cylindrical space (114) inside the housing (100) for serving as a buffer when the motion block assembly (106) performs the axial displacement.

FIG. 3 is a schematic structural view showing the power storage device wherein the interior of the annular power generation coil set (104) being coupled with the columnar magnet (107), and the exterior thereof being coupled with the outer magnet (117) relatively installed in the same polarity with the columnar magnet (107), according to one embodiment of the present invention;

The cross view of FIG. 3 is the same as what is shown in FIG. 2

As shown in FIG. 3, it mainly consists of:
--Housing (100): which is constituted by a material having poor magnetic conduction and poor electric conduction, formed in a hollow cylindrical shape and one inner end inwardly extended with a tubular annular coil set seat (101) with its distal end being extended for connecting to the annular power generation coil set (104), and an annular space (103) is formed between the tubular annular coil set seat (101) and the inner hole of the housing (100), and the center of the tubular annular coil set seat (101) is formed with a round space (102), and the annular power generation coil set (104) is installed with an output wire (105) for outputting the electric power generated by the annular power generation coil set (104) to a rectifying and charging circuit (300), then output to the anode terminal of a power storage device (310) from the output end of the rectifying and charging circuit (300), and then output to an anode output/input terminal (410) and a cathode output/input terminal (420) installed in the housing (100) from the anode terminal of the power storage device (310);
--Motion block assembly (106): which is constituted by a material having poor magnetic conduction and poor electric conduction, and is provided with a cup-shaped structure of motion block (110) for combining with the outer magnet (117), and the center of the cup-shaped structure of motion block (110) is provided with a center column of motion block (109) for combining with the columnar magnet (107), and the periphery of the central column of motion block (109) and the cup-shaped structure of motion block (110) form an inner annular space of motion block (111) for being sleeved and combined with the annular power generation coil set (104) and the tubular annular coil set seat (101) and allowing the mentioned two to perform relative axial displacement, and the round space (102) of the tubular annular coil set seat (101) is provided for being sleeved and combined with the columnar magnet (107) and the center column of motion block (109) and allowing the mentioned two to perform relative axial displacement;
--A first buffer member (112) is installed between the round space (102) of the tubular annular coil set seat (101) and the inner wall of the housing (100) for serving as a buffer while the center column (109) and the columnar magnet (107) of the motion block and the outer magnetic conductive member (108) perform axial displacement;
-- The mentioned columnar magnet (107) is provided for when performing the axial reciprocal vibration with the outer magnet (117) to pass through the annular power generation coil set (104), enabling the annular power generation coil set (104) to generate a power generation effect;
--Rectifying and charging circuit (300): which is constituted by electromechanical and solid electronic components and rectifying devices, and provided for rectifying the electric power generated by the annular power generation coil set (104) then inputting the electric power to the power storage device (310);
--Power storage device (310): which is constituted by a rechargeable secondary battery or ultra capacitor or capacitor, and provided for storing the electric power from the rectifying and charging circuit (300) or the electric power inputting from the anode output/input terminal (410) and the cathode output/input terminal (420);
--Anode output/input terminal (410): which is constituted by electric conductive terminal head or terminal or plug or socket structure, and installed in the housing (100) and connected to the anode terminal of the rectifying and charging circuit (300) for outputting or inputting electric energy to the exterior;
--Cathode output/input terminal (420): which is constituted by electric conductive terminal head or terminal or plug or socket structure, and installed in the housing (100) and connected to the cathode terminal of the rectifying and charging circuit (300) for outputting or inputting electric energy to the exterior;
--The cylindrical space (114) inside the housing (100) is provided for being sleeved with the outer periphery of the motion block assembly (106) and allowing the relative axial displacement, and a second buffer member (113) is installed between the motion block assembly (106) and the cylindrical space (114) inside the housing (100) for serving as a buffer when the motion block assembly (106) performs the axial displacement;
--The magnetic pole surfaces of the columnar magnet (107) and the columnar magnet (207) relative to the annular power generation coil set (104) include in the same polarity; or as shown in FIG. 4;
-- The magnetic pole surfaces of the columnar magnet (107) and the columnar magnet (207) relative to the annular power generation coil set (104) include in different polarities; FIG. 4 is a schematic structural view showing the power storage device wherein the interior of the annular power generation coil set (104) being coupled with the columnar magnet (107), and the exterior thereof being coupled with the outer magnet (117) relatively installed in different polarities to the columnar magnet (107), according to one embodiment of the present invention; The cross view of FIG. 4 is the same as what is shown in FIG. 2.

FIG. 5 is a schematic structural view showing the power storage device wherein the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnetic conductive members (108), (208), according to one embodiment of the preset invention.

The cross view of FIG. 5 is the same as what is shown in FIG. 2;

As shown in FIG. 5, it mainly consists of:
--Housing (100): which is constituted by a material having poor magnetic conduction and poor electric conduction, formed in a hollow cylindrical shape and one inner end inwardly extended with a tubular annular coil set seat (101) with its distal end being extended for combining with the annular power generation coil set (104), then combined with the tubular annular coil set partition seat (201) and extendedly combined with the annular power generation coil set (204), and an annular space (103) is formed between the tubular annular coil set seat (101) and the inner hole of the housing (100), and the center of the tubular annular coil set seat (101) is formed with a round space (102), and the annular power generation coil sets (104), (204) are normal-polarity connected in parallel or in series thereby the voltage being able to accumulate during the power generation, as well as are installed with an output wire (105) for outputting the electric power generated by the annular power generation coil sets (104), (204) to a rectifying and charging circuit (300), then output to the anode terminal of a power storage device (310) from the output end of the rectifying and charging circuit (300), and then output to an anode output/input terminal (410) and a cathode output/input terminal (420) installed in the housing (100) from the anode terminal of the power storage device (310);
--Motion block assembly (206): which is constituted by a material having poor magnetic conduction and poor electric conduction, and is provided with a cup-shaped structure of motion block (110) for combining with the outer magnetic conductive member (108), and further combined with the cup-shaped structure partition ring (210) and extendedly combined with the outer magnetic conductive member (208), and the center of the cup-shaped structure of motion block (110) is provided with a center column of motion block (109) for combining with the columnar magnet (107), and combined with the center column of motion block (209) and further extendedly combined with the columnar magnet (207) while the periphery of the central column of motion block (109) and the cup-shaped structure of motion block (110) form an inner annular space of motion block (111) for being sleeved combined with the annular power generation coil sets (104), (204) and the tubular annular coil set partition seat (201) and the tubular annular coil set seat (101) and allowing to perform relative axial displacement, and the tubular annular coil set seat (101) and the round space (102) of the tubular annular coil set partition seat (201) is provided for being sleeved combined with the columnar magnets (107), (207) and the center column of motion block (109), (209) and allowing the mentioned components to perform relative axial displacement;
-- A first buffer member (112) is installed between the round space (102) of the tubular annular coil set seat (101) and the inner wall of the housing (100) for serving as a buffer while the center columns (109), (209) and the columnar magnets (107), (207) of the motion block and the outer magnetic conductive members (108), (208) perform axial displacement;
--The interval of the columnar magnet (107) and the columnar magnet (207) partitioned by the center column of motion block (209), and the interval of the annular power generation coil set (104) and the annular power generation coil set (204) partitioned by the tubular annular coil set partition seat (201) enable the annular power generation coil set (104) and the annular power generation coil set (204) generate the voltage having the same phase, when the columnar magnet (107) and the columnar magnet (207) and the outer magnetic conductive member (108) and the outer magnetic conductive member (208) perform the axial reciprocal vibration to pass the annular power generation coil set (104) and the annular power generation coil set (204);
--Rectifying and charging circuit (300): which is constituted by electromechanical and solid electronic components and rectifying devices, and provided for rectifying the electric power generated by the annular power generation coil set (104) then inputting the electric power to the power storage device (310);
--Power storage device (310): which is constituted by a rechargeable secondary battery or ultra capacitor or capacitor, and provided for storing the electric power from the rectifying and charging circuit (300) or the electric power inputting from the anode output/input terminal (410) and the cathode output/input terminal (420);
--Anode output/input terminal (410): which is constituted by electric conductive terminal head or terminal or plug or socket structure, and installed in the housing (100) and connected to the anode terminal of the rectifying and charging circuit (300) for outputting or inputting electric energy to the exterior;
--Cathode output/input terminal (420): which is constituted by electric conductive terminal head or terminal or plug or socket structure, and installed in the housing (100) and connected to the cathode terminal of the rectifying and charging circuit (300) for outputting or inputting electric energy to the exterior;
--The cylindrical space (114) inside the housing (100) is provided for being sleeved with the outer periphery of the motion block assembly (106) and allowing to perform relative axial displacement, and a second buffer member (113) is installed between the motion block assembly (106) and the cylindrical space (114) inside the housing (100) for serving as a buffer when the motion block assembly (106) performs the axial displacement.

FIG. 6 is a schematic structural view showing the power storage device wherein the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnets (117), (217) arranged in the multiple segment format and relatively installed in the same polarity with the columnar magnet (107), according to one embodiment of the preset invention.

The cross view of FIG. 6 is the same as what is shown in FIG. 2

As shown in FIG. 6, it mainly consists of:
--Housing (100): which is constituted by a material having poor magnetic conduction and poor electric conduction, formed in a hollow cylindrical shape and one inner end inwardly extended with a tubular annular coil set seat (101) with its distal end being extended for combining with the annular power generation coil set (104), then combined with the tubular annular coil set partition seat (201) and extendedly combined with the annular power generation coil set (204), and an annular space (103) is formed between the tubular annular coil set seat (101) and the inner hole of the housing (100), and the center of the tubular annular coil set seat (101) is formed with a round space (102), and the annular power generation coil sets (104), (204) are normal-polarity connected in parallel or in series thereby the voltage being able to accumulate during the power generation, as well as are installed with an output wire (105) for outputting the electric power generated by the annular power generation coil sets (104), (204) to a rectifying and charging circuit (300), then output to the anode terminal of a power storage device (310) from the output end of the rectifying and charging circuit (300), and then output to an anode output/input terminal (410) and a cathode output/input terminal (420) installed in the housing (100) from the anode terminal of the power storage device (310);
--Motion block assembly (206): which is constituted by a material having poor magnetic conduction and poor electric conduction, and is provided with a cup-shaped structure of motion block (110) for combining with the outer magnetic (117), and further combined with the cup-shaped structure partition ring (210) and extendedly combined with the outer magnet (217), and the center of the cup-shaped structure of motion block (110) is provided with a center column of motion block (109) for combining with the columnar magnet (107), and combined with the center column of motion block (209) and further extendedly combined with the columnar magnet (207) while the periphery of the central column of motion block (109) and the cup-shaped structure of motion block (110) form an inner annular space of motion block (111) for being sleeved combined with the annular power generation coil sets (104), (204) and the tubular annular coil set partition seat (201) and the tubular annular coil set seat (101) and allowing to perform relative axial displacement, and the tubular annular coil set seat (101) and the round space (102) of the tubular annular coil set partition seat (201) is provided for being sleeved combined with the columnar magnets (107), (207) and the center column of motion block (109), (209) and allowing the mentioned components to perform relative axial displacement;
--A first buffer member (112) is installed between the round space (102) of the tubular annular coil set seat (101) and the inner wall of the housing (100) for serving as a buffer while the center columns (109), (209) and the columnar magnets (107), (207) of the motion block and the outer magnets (117), (217) perform axial displacement;
--The interval of the columnar magnet (107) and the columnar magnet (207) and the outer magnet (117) and the outer magnet (217) partitioned by the center column of motion block (209), and the interval of the annular power generation coil set (104) and the annular power generation coil set (204) partitioned by the tubular annular coil set partition seat (201) enable the annular power generation coil set (104) and the annular power generation coil set (204) generate the voltage having the same phase, when the columnar magnet (107) and the columnar magnet (207) and the outer magnet (117) and the outer magnet (217) perform the axial reciprocal vibration to pass the annular power generation coil set (104) and the annular power generation coil set (204);
--Rectifying and charging circuit (300): which is constituted by electromechanical and solid electronic components and rectifying devices, and provided for rectifying the electric power generated by the annular power generation coil set (104) then inputting the electric power to the power storage device (310);
--Power storage device (310): which is constituted by a rechargeable secondary battery or ultra capacitor or capacitor, and provided for storing the electric power from the rectifying and charging circuit (300) or the electric power inputting from the anode output/input terminal (410) and the cathode output/input terminal (420);
--Anode output/input terminal (410): which is constituted by electric conductive terminal head or terminal or plug or socket structure, and installed in the housing (100) and connected to the anode terminal of the rectifying and charging circuit (300) for outputting or inputting electric energy to the exterior;
--Cathode output/input terminal (420): which is constituted by electric conductive terminal head or terminal or plug or socket structure, and installed in the housing (100) and connected to the cathode terminal of the rectifying and charging circuit (300) for outputting or inputting electric energy to the exterior;
-- The cylindrical space (114) inside the housing (100) is provided for being sleeved with the outer periphery of the motion block assembly (106) and allowing to perform relative axial displacement, and a second buffer member (113) is installed between the motion block assembly (106) and the cylindrical space (114) inside the housing (100) for serving as a buffer when the motion block assembly (106) performs the axial displacement;
--The magnetic pole surfaces of the columnar magnet (107) and the columnar magnet (207) relative to the annular power generation coil set (104) and the magnetic pole surfaces of the outer magnet (117) and the outer magnet (217) relative to the annular power generation coil set (204) include in the same polarity; or as shown in FIG. 7;
-- The magnetic pole surfaces of the columnar magnet (107) and the columnar magnet (207) relative to the annular power generation coil set (104) and the magnetic pole surfaces of the outer magnet (117) and the outer magnet (217) relative to the annular power generation coil set (204) include in different polarities; FIG. 7 is a schematic structural view showing the power storage device wherein the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnets (117), (217) arranged in the multiple segment format and relatively installed in different polarities to the columnar magnet (107), according to one embodiment of the preset invention.

The cross view of FIG. 7 is the same as what is shown in FIG. 2.

The columnar magnet (107), the columnar magnet (207), the annular power generation coil set (104), the annular power generation coil set (204), the outer magnetic conductive member (108) and the outer magnetic conductive member (208), shown in FIG. 5, are all composed of two units or more than two units;

The columnar magnet (107), the columnar magnet (207), the annular power generation coil set (104), the annular power generation coil set (204), the outer magnet (117) and the outer magnet (217), shown in FIG. 6 and FIG. 7, are all composed of two units or more than two units;

The columnar magnet (107), the columnar magnet (207), the outer magnetic conductive member (108) and the outer magnetic conductive member (208), shown in FIG. 5, are all composed of two units or more than two units, and the annular power generation coil set (104) is composed of one unit;

The columnar magnet (107), the columnar magnet (207), the outer magnet (117) and the outer magnet (217), shown in FIG. 6 and FIG. 7, are all composed of two units or more than two units, and the annular power generation coil set (104) is composed of one unit;

According to power storage device of vibration type power generation equipped with inner columnar and outer annular magnetic motion block provided by the present invention, the housing (100), the anode output/input terminal (410) and the cathode output/input terminal (420) include a structure having electric conductive output interface and shape compatible to a conventional battery, or other structures according to the actual needs.

## Claims

1. A power storage device of vibration type power generation equipped with a magnetic motion block, the magnetic motion block having an inner columnar portion and an outer annular portion, comprising a columnar magnet (107) in a round columnar shape having different magnetic poles in the axial direction, and an outer magnetic conductive member (108) at the exterior of and enclosing the columnar magnet (107) wherein the columnar magnet (107) and the outer magnetic conductive member (108) are arranged to form a motion block assembly (106) and are concentrically arranged relative to one another to form a magnetic path for performing the synchronous axial displacement, and the outer diameter of the columnar magnet (107) is smaller than the inner diameter of the outer magnetic conductive member (108) and formed with an annular gap allowing an annular power generation coil set (104) to pass therebetween, such that when the magnetic motion block and the coil set (104) axially perform relative reciprocal axial displacing vibrations, the annular power generation coil set (104) generates electric power according to Lenz Law, and the electric energy is stored in a power storage device through a rectifying and charging circuit, the power storage device comprising an anode output/input terminal and a cathode output/input terminal for serving as electric energy output/input interfaces, wherein the power storage device further comprises:
a housing (100): which is constituted by a material having poor magnetic conduction and poor electric conduction, formed in a hollow cylindrical shape with one inner end inwardly extended forming a tubular annular coil set seat (101) with its distal end being extended for connecting to the annular power generation coil set (104), wherein an annular space (103) is formed between the tubular annular coil set seat (101) and the inner hole of the housing (100) and the center of the tubular annular coil set seat (101) is formed with a round space (102), and wherein the annular power generation coil set (104) is installed with an output wire (105) for outputting the electric power generated by the annular power generation coil set (104) to a rectifying and charging circuit (300), wherein the anode of the rectifying and charging circuit (300) is connected to the anode of a power storage device (310) and to an anode output/input terminal (410) installed in the housing (100) and wherein the cathode of the rectifying and charging circuit is connected to the cathode of the power storage device (310) and to a cathode output/input terminal (420) installed in the housing (100);
a motion block assembly (106) which is constituted by a material having poor magnetic conduction and poor electric conduction comprising a cup-shaped structure for combining with the outer magnetic conductive member (108) and a center column at the center of the cup-shaped structure for combining with the columnar magnet (107) wherein the periphery of the central column of the motion block (109) and the cup-shaped structure of the motion block (110) form an inner annular space (111) for accommodating the annular power generation coil set (104) and the tubular annular coil set seat (101) and allowing the motion block and the coil set to perform relative axial displacement, and wherein the round space (102) of the tubular annular coil set seat (101) is provided for accommodating the columnar magnet (107) and the center column of the motion block (109) and allowing the motion block and the coil set to perform relative axial displacement;
a first buffer member (112) installed between the round space (102) of the tubular annular coil set seat (101) and the inner wall of the housing (100) for serving as a buffer while the center column (109) and the columnar magnet (107) of the motion block assembly (106) and the outer magnetic conductive member (108) perform axial displacement; wherein upon axial reciprocation of the motion block the columnar magnet (107) and the outer magnetic conductive member (108) pass through the annular power generation coil set (104), enabling the annular power generation coil set (104) to generate power;
a rectifying and charging circuit (300) which is constituted by electromechanical and solid electronic components and rectifying devices, and provided for rectifying the electric power generated by the annular power generation coil set (104) then inputting the electric power to the power storage device (310);
a power storage device (310) which is constituted by a rechargeable secondary battery or ultra capacitor or capacitor, and provided for storing the electric power from the rectifying and charging circuit (300) or the electric power inputting from the anode outputlinput terminal (410) and the cathode output/input terminal (420);
an anode output/input terminal (410) which is constituted by electric conductive terminal head or terminal or plug or socket structure, and installed in the housing (100) and connected to the anode terminal of the rectifying and charging circuit (300) for outputting or inputting electric energy to the exterior;
a cathode output/input terminal (420) which is constituted by electric conductive terminal head or terminal or plug or socket structure, and installed in the housing (100) and connected to the cathode terminal of the rectifying and charging circuit (300) for outputting or inputting electric energy to the exterior;
wherein a cylindrical space (114) is provided inside the housing (100) for accommodating the outer periphery of the motion block assembly (106) and allowing the relative axial displacement, and wherein a second buffer member (113) is installed between the motion block assembly (106) and the cylindrical space (114) inside the housing (100) for serving as a buffer when the motion block assembly (106) performs the axial displacement.

2. A power storage device of vibration type power generation equipped with a magnetic motion block, the magnetic motion block having an inner columnar portion and an outer annular portion as claimed in claim 1, wherein the interior of the annular power generation coil set (104) is coupled with the columnar magnet (107), and the exterior of the annular power generation coil set (104) is coupled with an outer magnet (117) relatively installed with the same polarity as the columnar magnet (107), wherein the outer magnet (117) replaces the outer magnetic conductive member (108) of claim 1, wherein the power storage device comprises:
a housing (100): which is constituted by a material having poor magnetic conduction and poor electric conduction, formed in a hollow cylindrical shape with one inner end inwardly extended forming a tubular annular coil set seat (101) with its distal end being extended for connecting to the annular power generation coil set (104), wherein an annular space (103) is formed between the tubular annular coil set seat (101) and the inner hole of the housing (100) and the center of the tubular annular coil set seat (101) is formed with a round space (102), and wherein the annular power generation coil set (104) is installed with an output wire (105) for outputting the electric power generated by the annular power generation coil set (104) to a rectifying and charging circuit (300),wherein the anode of the rectifying and charging circuit (300) is connected to the anode of the power storage device (310) and to an anode output/input terminal (410) installed in the housing (100) and wherein the cathode of the rectifying and charging circuit (300) is connected to the cathode of the power storage device (310) and a cathode output/input terminal (420) installed in the housing;
a motion block assembly (106) which is constituted by a material having poor magnetic conduction and poor electric conduction comprising a cup-shaped structure for combining with the outer magnet (117) and a center column at the center of the cup-shaped structure for combining with the columnar magnet (107) wherein the periphery of the central column of the motion block (109) and the cup-shaped structure of the motion block (110) form an inner annular space (111) for accomodating the annular power generation coil set (104) and the tubular annular coil set seat (101) and allowing the motion block and the coil set to perform relative axial displacement, and wherein the round space (102) of the tubular annular coil set seat (101) is provided for accommodating the columnar magnet (107) and the center column of the motion block (109) and allowing the motion block and the coil set to perform relative axial displacement;
a first buffer member (112) installed between the round space (102) of the tubular annular coil set seat (101) and the inner wall of the housing (100) for serving as a buffer while the center column (109) and the columnar magnet (107) of the motion block and the outer magnet (117) perform axial displacement;
wherein upon axial reciprocation of the motion block the columnar magnet (107) and the outer magnet (117) pass through the annular power generation coil set (104), enabling the annular power generation coil set (104) to generate power;
a rectifying and charging circuit (300) which is constituted by electromechanical and solid electronic components and rectifying devices, and provided for rectifying the electric power generated by the annular power generation coil set (104) and then inputting the electric power to the power storage device (310);
a power storage device (310) which is constituted by a rechargeable secondary battery or ultra capacitor or capacitor, and provided for storing the electric power from the rectifying and charging circuit (300) or the electric power inputting from the anode output/input terminal (410) and the cathode output/input terminal (420);
an anode output/input terminal (410) which is constituted by electric conductive terminal head or terminal or plug or socket structure, and installed in the housing (100) and connected to the anode terminal of the rectifying and charging circuit (300) for outputting or inputting electric energy to the exterior;
a cathode output/input terminal (420) which is constituted by electric conductive terminal head or terminal or plug or socket structure, and installed in the housing (100) and connected to the cathode terminal of the rectifying and charging circuit (300) for outputting or inputting electric energy to the exterior;
wherein a cylindrical space (114) is provided inside the housing for accommodating the outer periphery of the motion block assembly (106) and allowing the relative axial displacement, and wherein a second buffer member (113) is installed between the motion block assembly (106) and the cylindrical space (114) inside the housing (100) for serving as a buffer when the motion block assembly (106) performs the axial displacement;
and wherein magnetic pole surfaces of the columnar magnet (107) and the outer magnet (117) relative to the annular power generation coil set (104) have the same polarity.

3. A power storage device of vibration type power generation equipped with a magnetic motion block having an inner columnar portion and an outer annular portion as claimed in claim 2, wherein the magnetic pole surfaces of the columnar magnet (107) and the outer magnet (117) relative to the annular power generation coil set (104) have different polarities.

4. A power storage device of vibration type power generation equipped with a magnetic motion block having an inner columnar and an outer annular portion as claimed in claim 1, wherein the power storage device comprises an annular power generation coil set and a further annular power generation coil set (204) axially displaced from the annular power generation coil set (104), wherein the interior of the annular power generation coil sets (104), (204) is coupled with the columnar magnets (107), (207), and the exterior thereof is coupled with the outer magnetic conductive members (108), (208), wherein the power storage device further comprises:
a housing (100) which is constituted by a material having poor magnetic conduction and poor electric conduction, formed in a hollow cylindrical shape with one inner end inwardly extended forming a tubular annular coil set seat (101) with its distal end being extended for connecting to the annular power generation coil set (104), and combined with a further tubular annular coil set , partition seat (201) being extendedly connected to the annular power generation coil set (204), wherein an annular space (103) is formed between the tubular annular coil set seat (101) and the inner hole of the housing (100), and the center of the tubular annular coil set seat (101) is formed with a round space (102), and wherein the annular power generation coil sets (104), (204) are connected in parallel or in series such that the voltage is able to accumulate during the power generation, and the annular power generation coil sets (104), (204) are each installed with an output wire (105) for outputting the electric power generated by the annular power generation coil sets (104), (204) to a rectifying and charging circuit (300), wherein the anode of the rectifying and charging circuit (300) is connected to the anode of a power storage device (310) and to an anode output/input terminal (410) installed in the housing (100) and wherein the cathode of the rectifying and charging circuit is connected to the cathode of the power storage device (310) and to a cathode output/input terminal (420) installed in the housing (100);
a motion block assembly (206) which is constituted by a material having poor magnetic conduction and poor electric conduction comprising a cup-shaped structure for combining with the outer magnetic conductive member (108), and a cup-shaped structure partition ring (210) extendedly combined with a further outer magnetic conductive member (208), and a center colunm of motion block (109) at the center of the cup-shaped structure for combining with the columnar magnet (107) and a further center colunm of motion block (209) extendedly combined with a further columnar magnet (207), wherein the periphery of the central colunm of the motion block (109) and the cup-shaped structure of the motion block (110) form an inner annular space (111) for accommodating the annular power generation coil sets (104), (204) and the further tubular annular coil set partition seat (201) and the tubular annular coil set seat (101) and allowing to perform relative axial displacement, and wherein the tubular annular coil set seat (101) and the round space (102) of the further tubular annular coil set partition seat (201) is provided for accommodating the columnar magnets (107), (207) and the center colunm of the motion blocks (109), (209) and allowing the motion blocks and the coil sets to perform relative axial displacement;
a first buffer member (112) installed between the round space (102) of the tubular annular coil set seat (101) and the inner wall of the housing (100) for serving as a buffer while the center columns (109), (209) and the columnar magnets (107), (207) of the motion block and the outer magnetic conductive members (108), (208) perform axial displacement;
wherein the interval of the columnar magnet (107) and the further columnar magnet (207) partitioned by the further center column of motion block (209), and the interval of the annular power generation coil set (104) and the further annular power generation coil set (204) partitioned by the tubular annular coil set partition seat (201) enable the annular power generation coil set (104) and the further annular power generation coil set (204) to generate a voltage having the same phase, wherein upon axial reciprocation of motion block the columnar magnet (107) and the columnar magnet (207) and the outer magnetic conductive member (108) and the outer magnetic conductive member (208) pass through the annular power generation coil set (104) and the further annular power generation coil set (204) to generate a power;
a rectifying and charging circuit (300) which is constituted by electromechanical and solid electronic components and rectifying devices, and provided for rectifying the electric power generated by the annular power generation coil set (104) then inputting the electric power to the power storage device (310);
a power storage device (310) which is constituted by a rechargeable secondary battery or ultra capacitor or capacitor, and provided for storing the electric power from the rectifying and charging circuit (300) or the electric power inputting from the anode output/input terminal (410) and the cathode output/input terminal (420);
an anode output/input terminal (410): which is constituted by electric conductive terminal head or terminal or plug or socket structure, and installed in the housing (100) and connected to the anode terminal of the rectifying and charging circuit (300) for outputting or inputting electric energy to the exterior;
a cathode output/input terminal (420): which is constituted by electric conductive terminal head or terminal or plug or socket structure, and installed in the housing (100) and connected to the cathode terminal of the rectifying and charging circuit (300) for outputting or inputting electric energy to the exterior;
wherein a cylindrical space (114) is provided inside the housing (100) for accommodating the outer periphery of the motion block assembly (106) and allowing the relative axial displacement, and wherein a second buffer member (113) is installed between the motion block assembly (106) and the cylindrical space (114) inside the housing (100) for serving as a buffer when the motion block assembly (106) performs the axial displacement.

5. A power storage device of vibration type power generation equipped with a magnetic motion block having an inner columnar portion and an outer annular portion as claimed in claim 2, wherein the power storage device comprises an annular power generation coil set (104) and a further annular power generation coil set (204) axially displaced from the annular power generation coil set (104), wherein and the interior of the annular power generation coil sets (104), (204) is coupled with columnar magnets (107, 207), and the exterior of the annular power generating coil sets (104, 204) being coupled with the outer magnets (117 , 217) arranged relatively with the same polarity as the columnar magnet (107), the power storage device further comprises:
a housing (100): which is constituted by a material having poor magnetic conduction and poor electric conduction, formed in a hollow cylindrical shape with one inner end inwardly extended forming a tubular annular coil set seat (101) with its distal end being extended for connecting to the annular power generation coil set (104), and combined with a further tubular annular coil set partition seat (201) extendedly connected to the further annular power generation coil set (204), wherein an annular space (103) is formed between the tubular annular coil set seat (101) and the inner hole of the housing (100), and the center of the tubular annular coil set seat (101) is formed with a round space (102), and wherein the annular power generation coil sets (104 , 204) are connected in parallel or in series such that the voltage is able to accumulate during the power generation, and the annular power generation coil sets (104 , 204) are each installed with an output wire (105) for outputting the electric power generated by the annular power generation coil sets (104 , 204) to a rectifying and charging circuit (300), wherein the anode of the rectifying and charging circuit (300) is connected to the anode of a power storage device (310) and to an anode output/input terminal (410) installed in the housing (100) and wherein the cathode of the rectifying and charging circuit is connected to the cathode of the power storage device (310) and to a cathode output/input terminal (420) installed in the housing (100);
a motion block assembly (206) which is constituted by a material having poor magnetic conduction and poor electric conduction comprising a cup-shaped structure for combining with the outer magnet (117), and a cup-shaped structure partition ring (210) extendedly combined with the further outer magnet (217), and a center colunm (109) at the center of the cup-shaped structure for combining with the columnar magnet (107) and a further center column of motion block (209) extendedly combined with a further columnar magnet (207), wherein the periphery of the central colunm of the motion block (109) and the cup-shaped structure of the motion block (110) form an inner annular space (111) for accommodating the annular power generation coil sets (104 , 204) and the further tubular annular coil set partition seat (201) and the tubular annular coil set seat (101) and allowing to perform relative axial displacement, and wherein the tubular annular coil set seat (101) and the round space (102) of the further tubular annular coil set partition seat (201) is provided for accommodating the columnar magnets (107, 207) and the center column of the motion blocks (109, 209) and allowing the motion blocks and the coil sets to perform relative axial displacement;
a first buffer member (112) installed between the round space (102) of the tubular annular coil set seat (101) and the inner wall of the housing (100) for serving as a buffer while the center columns (109), (209) and the columnar magnets (107, 207) of the motion block and the outer magnets (117, 217) perform axial displacement;
wherein the interval of the columnar magnet (107) and the further columnar magnet (207) and the outer magnet (117) and the further outer magnet (217) partitioned by the further center column of motion block (209), and the interval of the annular power generation coil set (104) and the annular power generation coil set (204) partitioned by the tubular annular coil set partition seat (201) enable the annular power generation coil set (104) and the further annular power generation coil set (204) to generate the voltage having the same phase, wherein upon axial reciprocation of motion block the columnar magnet (107) and the further columnar magnet (207) and the outer magnet (117) and the further outer magnet (217) pass through the annular power generation coil set (104) and the further annular power generation coil set (204);
wherein the rectifying and charging circuit (300) comprises electromechanical and solid electronic components and rectifying devices, and provided for rectifying the electric power generated by the annular power generation coil set (104) then inputting the electric power to the power storage device (310);
a power storage device (310): which is constituted by a rechargeable secondary battery or ultra capacitor or capacitor, and provided for storing the electric power from the rectifying and charging circuit (300) or the electric power inputting from the anode output/input terminal (410) and the cathode output/input terminal (420);
a anode output/input terminal (410): which is constituted by electric conductive terminal head or terminal or plug or socket structure, and installed in the housing (100) and connected to the anode terminal of the rectifying and charging circuit (300) for outputting or inputting electric energy to the exterior;
a cathode output/input terminal (420): which is constituted by electric conductive terminal head or terminal or plug or socket structure, and installed in the housing (100) and connected to the cathode terminal of the rectifying and charging circuit (300) for outputting or inputting electric energy to the exterior;
wherein a cylindrical space (114) is provided inside the housing (100) for accommodating the outer periphery of the motion block assembly (106) and allowing to perform relative axial displacement, and wherein a second buffer member (113) is installed between the motion block assembly (106) and the cylindrical space (114) inside the housing (100) for serving as a buffer when the motion block assembly (106) performs the axial displacement;
wherein the magnetic pole surfaces of the columnar magnet (107) and the further columnar magnet (207) relative to the annular power generation coil set (104) and the magnetic pole surfaces of the outer magnet (117) and the further outer magnet (217) relative to the annular power generation coil set (204) have the same polarity.

6. A power storage device of vibration type power generation equipped with a magnetic motion block having an inner columnar portion and an outer annular portion as claimed in claim 5, wherein the magnetic pole surfaces of the columnar magnet (107) and the outer magnet (117) relative to the annular power generation coil set (104) and the magnetic pole surfaces of the further columnar magnet (207) and the further outer magnet (217) relative to the further annular power generation coil set (204) have different polarities.

7. A power storage device of vibration type power generation equipped with a magnetic motion block having an inner columnar portion and an annular outer portion as claimed in claim 4, wherein the columnar magnet (107), the columnar magnet (207), the annular power generation coil set (104), the annular power generation coil set (204), the outer magnetic conductive member (108) and the outer magnetic conductive member (208) are all composed of two units or more than two units

8. A power storage device of vibration type power generation equipped with a magnetic motion block having an inner columnar portion and an outer annular portion as claimed in claim 5, wherein the columnar magnet (107), the columnar magnet (207), the annular power generation coil set (104), the annular power generation coil set (204), the outer magnet (117) and the outer magnet (217) are all composed of two units or more than two units.

9. A power storage device of vibration type power generation equipped with a magnetic block having an inner columnar portion and an outer annular portion as claimed in claim 6, wherein columnar magnet (107), the columnar magnet (207), the annular power generation coil set (104), the annular power generation coil set (204), the outer magnet (117) and the outer magnet (217) are all composed of two units or more than two units.

10. A power storage device of vibration type power generation equipped with a magnetic motion block having an inner columnar portion and an outer annular portion as claimed in claim 4, wherein the columnar magnet (107), the columnar magnet (207), the outer magnetic conductive member (108) and the outer magnetic conductive member (208) are all composed of two units or more than two units, and the annular power generation coil set (104) is composed of one unit.

11. A power storage device of vibration type power generation equipped with a magnetic motion block having an inner columnar portion and an outer annular portion as claimed in claim 5, wherein the columnar magnet (107), the columnar magnet (207), the outer magnet (117) and the outer magnet (217) are all composed of two units or more than two units, and the annular power generation coil set (104) is composed of one unit.

12. A power storage device of vibration type power generation equipped with a magnetic motion block having an inner columnar portion and an outer annular portion as claimed in claim 6, wherein columnar magnet (107), the columnar magnet (207), the outer magnet (117) and the outer magnet (217) are all composed of two units or more than two units, and the annular power generation coil set (104) is composed of one unit.

## Patentansprüche

1. Energiespeichervorrichtung basierend auf Energieerzeugung durch Vibration, ausgerüstet mit einem magnetischen Bewegungsblock, wobei der magnetische Bewegungsblock einen inneren säulenförmigen Abschnitt und einen äußeren ringförmigen Abschnitt aufweist, umfassend einen säulenförmigen Magnet (107) in Form einer runden Säule mit unterschiedlichen Magnetpolen in der axialen Richtung, und ein äußeres magnetisches leitfähiges Element (108) an der Außenseite des säulenförmigen Magnets (107) und diesen einschließend, wobei der säulenförmige Magnet (107) und das äußere magnetische leitfähige Element (108) dazu angeordnet sind, eine Bewegungsblockbaugruppe (106) zu bilden, und relativ zueinander konzentrisch angeordnet sind, um einen Magnetweg zum Vollziehen der synchronen Axialverschiebung zu bilden, wobei der Außendurchmesser des säulenförmigen Magnets (107) kleiner als der Innendurchmesser des äußeren magnetischen leitfähigen Elements (108) ist und mit einem Ringspalt gebildet ist, das ermöglicht, dass ein ringförmiger Energieerzeugungsspulensatz (104) hindurch gelangt, derart, dass dann, wenn der magnetische Bewegungsblock und der Spulensatz (104) axial relativ hin und her gehende Axialverschiebungsvibrationen vollziehen, der ringförmige Energieerzeugungsspulensatz (104) gemäß der Lenzschen Regel Energie erzeugt und die elektrische Energie durch einen Gleichrichtungs- und Ladungsschaltkreis in einer Energiespeichervorrichtung gespeichert wird, wobei die Energiespeichervorrichtung einen Anoden-Ausgangs-/Eingangsanschluss und einen Kathoden-Ausgangs-/Eingangsanschluss umfasst, die als Eingangs-/Ausgangsschnittstellen für elektrische Energie dienen, wobei die Energiespeichervorrichtung ferner Folgendes umfasst:
ein Gehäuse (100): das gebildet ist aus einem Material mit schlechter magnetischer Leitfähigkeit und schlechter elektrischer Leitfähigkeit und in der Form eines Hohlzylinders gebildet ist, wobei sich ein inneres Ende nach innen erstreckt und einen rohrförmigen ringförmigen Spulensatzsitz (101) bildet, und sein distales Ende für eine Verbindung mit dem ringförmigen Energieerzeugungsspulensatz (104) verlängert ist, wobei ein ringförmiger Raum (103) zwischen dem rohrförmigen ringförmigen Spulensatzsitz (101) und der Innenbohrung des Gehäuse (100) gebildet ist und die Mitte des rohrförmigen ringförmigen Spulensatzsitzes (101) mit einem Rundraum (102) gebildet ist, und wobei der ringförmige Energieerzeugungsspulensatz (104) mit einem Ausgangsdraht (105) zum Ausgeben der elektrischen Energie, die von dem ringförmigen Energieerzeugungsspulensatz (104) erzeugt wird, an einen Gleichrichtungs- und Ladungsschaltkreis (300) installiert ist, wobei die Anode des Gleichrichtungs- und Ladungsschaltkreises (300) mit der Anode einer Energiespeichervorrichtung (310) und mit einem Anoden-Ausgangs-/Eingangsanschluss (410) verbunden ist, der im Gehäuse (100) installiert ist, und wobei die Kathode des Gleichrichtungs- und Ladungsschaltkreises mit der Kathode der Energiespeichervorrichtung (310) und mit einem Kathoden-Ausgangs-/Eingangsanschluss (420) verbunden ist, der in dem Gehäuse (100) installiert ist;
eine Bewegungsblockbaugruppe (106), die aus einem Material mit schlechter magnetischer Leitfähigkeit und schlechter elektrischer Leitfähigkeit gebildet ist und eine becherförmige Struktur zum Kombinieren mit dem äußeren magnetischen leitfähigen Element (108) und eine Mittelsäule in der Mitte der becherförmigen Struktur zum Kombinieren mit dem säulenförmige Magnet (107) aufweist, wobei der Umfang der Mittelsäule des Bewegungsblocks (109) und die becherförmige Struktur des Bewegungsblocks (110) einen inneren ringförmiger Raum (111) zum Aufnehmen des ringförmigen Energieerzeugungsspulensatzes (104) und des rohrförmigen ringförmigen Spulensatzsitzes (101) bilden und es ermöglichen, dass der Bewegungsblock und der Spulensatz eine relative Axialverschiebung vollziehen, und wobei der Rundraum (102) des rohrförmigen ringförmigen Spulensatzsitzes (101) dazu vorgesehen ist, den säulenförmigen Magnet (107) und die Mittelsäule des Bewegungsblocks (109) aufzunehmen und es zu ermöglichen, dass der Bewegungsblock und der Spulensatz die relative Axialverschiebung vollziehen;
ein erstes Pufferelement (112), das zwischen dem Rundraum (102) des rohrförmigen ringförmigen Spulensatzsitzes (101) und der Innenwand des Gehäuses (100) installiert ist, um als ein Puffer zu dienen, während die Mittelsäule (109) und der säulenförmige Magnet (107) der Bewegungsblockbaugruppe (106) und das äußere magnetische leitfähigen Element (108) die Axialverschiebung vollziehen; wobei beim axialen Hin- und Herbewegen des Bewegungsblocks der säulenförmige Magnet (107) und das äußere magnetische leitfähige Element (108) durch den ringförmigen Energieerzeugungsspulensatz (104) treten, wodurch der ringförmige Energieerzeugungsspulensatz (104) Energie erzeugen kann;
einen Gleichrichtungs- und Ladungsschaltkreis (300), der durch elektromechanische und elektronische Festkörperkomponenten und Gleichrichtungsvorrichtungen gebildet ist und zum Gleichrichten der elektrischen Energie, die von dem ringförmigen Energieerzeugungsspulensatz (104) erzeugt wird, und anschließenden Einspeisen der elektrischen Energie in die Energiespeichervorrichtung (310) vorgesehen ist;
eine Energiespeichervorrichtung (310), die durch eine wiederaufladbare Sekundärbatterie oder einen Superkondensator oder Kondensator gebildet ist und zum Speichern der elektrischen Energie vom Gleichrichtungs- und Ladungsschaltkreis (300) oder der elektrische Energie, die von dem Anoden-Ausgangs-/Eingangsanschluss (410) und dem Kathoden-Ausgangs-/Eingangsanschluss (420) eingespeist wird, vorgesehen ist;
einen Anoden-Ausgangs-/Eingangsanschluss (410), der durch eine elektrisch leitende Anschlusskopf- oder Anschluss- oder Stecker- oder Buchsenstruktur gebildet ist und in dem Gehäuse (100) installiert ist und mit dem Anodenanschluss des Gleichrichtungs- und Ladungsschaltkreises (300) verbunden ist, um elektrische Energie nach außen auszugeben oder einzuspeisen;
einen Kathoden-Ausgangs-/Eingangsanschluss (420), der durch eine elektrisch leitende Anschlusskopf- oder Anschluss- oder Stecker- oder Buchsenstruktur gebildet ist und in dem Gehäuse (100) installiert ist und mit dem Kathodenanschluss des Gleichrichtungs- und Ladungsschaltkreises (300) verbunden ist, um elektrische Energie nach außen auszugeben oder einzuspeisen;
wobei ein zylinderförmiger Raum (114) im Inneren des Gehäuses (100) vorgesehen ist, um den Außenumfang der Bewegungsblockbaugruppe (106) aufzunehmen und die relative Axialverschiebung zu ermöglichen, und wobei ein zweites Pufferelement (113) zwischen der Bewegungsblockbaugruppe (106) und dem zylinderförmiger Raum (114) im Inneren des Gehäuses (100) installiert ist, um als ein Puffer zu dienen, wenn die Bewegungsblockbaugruppe (106) die Axialverschiebung vollzieht.

2. Energiespeichervorrichtung basierend auf Energieerzeugung durch Vibration, ausgerüstet mit einem magnetischen Bewegungsblock, wobei der magnetische Bewegungsblock einen inneren säulenförmigen Abschnitt und einen äußeren ringförmigen Abschnitt aufweist, nach Anspruch 1, wobei das Innere des ringförmigen Energieerzeugungsspulensatzes (104) an den säulenförmige Magnet (107) gekoppelt ist und das Äußere des ringförmigen Energieerzeugungsspulensatzes (104) an einen äußeren Magnet (117) gekoppelt ist, der relativ mit der gleichen Polarität wie der säulenförmige Magnet (107) installiert ist, wobei der äußere Magnet (117) das äußere magnetische leitfähige Element (108) nach Anspruch 1 ersetzt, wobei die Energiespeichervorrichtung Folgendes umfasst:
ein Gehäuse (100): das gebildet ist aus einem Material mit schlechter magnetischer Leitfähigkeit und schlechter elektrischer Leitfähigkeit, in der Form eines Hohlzylinders gebildet ist, wobei sich ein inneres Ende nach innen erstreckt und einen rohrförmigen ringförmigen Spulensatzsitz (101) bildet, dessen distales Ende für eine Verbindung mit dem ringförmigen Energieerzeugungsspulensatz (104) verlängert ist, wobei ein ringförmiger Raum (103) zwischen dem rohrförmigen ringförmigen Spulensatzsitz (101) und der Innenbohrung des Gehäuse (100) gebildet ist und die Mitte des rohrförmigen ringförmigen Spulensatzsitzes (101) mit einem Rundraum (102) gebildet ist, und wobei der ringförmige Energieerzeugungsspulensatz (104) mit einem Ausgangsdraht (105) zum Ausgeben der elektrischen Energie, die von dem ringförmigen Energieerzeugungsspulensatz (104) erzeugt wird, an einen Gleichrichtungs- und Ladungsschaltkreis (300) installiert ist, wobei die Anode des Gleichrichtungs- und Ladungsschaltkreises (300) mit der Anode der Energiespeichervorrichtung (310) und mit einem Anoden-Ausgangs-/Eingangsanschluss (410) verbunden ist, der im Gehäuse (100) installiert ist, und wobei die Kathode des Gleichrichtungs- und Ladungsschaltkreises mit der Kathode der Energiespeichervorrichtung (310) und mit einem Kathoden-Ausgangs-/Eingangsanschluss (420) verbunden ist, der in dem Gehäuse (100) installiert ist;
eine Bewegungsblockbaugruppe (106), die aus einem Material mit schlechter magnetischer Leitfähigkeit und schlechter elektrischer Leitfähigkeit gebildet ist und eine becherförmige Struktur zum Kombinieren mit dem äußeren Magnet (117) und eine Mittelsäule in der Mitte der becherförmigen Struktur zum Kombinieren mit dem säulenförmige Magnet (107) aufweist, wobei der Umfang der Mittelsäule des Bewegungsblocks (109) und die becherförmige Struktur des Bewegungsblocks (110) einen inneren ringförmiger Raum (111) zum Aufnehmen des ringförmigen Energieerzeugungsspulensatzes (104) und des rohrförmigen ringförmigen Spulensatzsitzes (101) bilden und es ermöglichen, dass der Bewegungsblock und der Spulensatz eine relative Axialverschiebung vollziehen, und wobei der Rundraum (102) des rohrförmigen ringförmigen Spulensatzsitzes (101) dazu vorgesehen ist, den säulenförmigen Magnet (107) und die Mittelsäule des Bewegungsblocks (109) aufzunehmen und es zu ermöglichen, dass der Bewegungsblock und der Spulensatz die relative Axialverschiebung vollziehen;
ein erstes Pufferelement (112), das zwischen dem Rundraum (102) des rohrförmigen ringförmige Spulensatzsitzes (101) und der Innenwand des Gehäuses (100) installiert ist, um als ein Puffer zu dienen, während die Mittelsäule (109) und der säulenförmige Magnet (107) des Bewegungsblocks und der äußere Magnet (117) die Axialverschiebung vollziehen;
wobei beim axialen Hin- und Herbewegen des Bewegungsblocks der säulenförmige Magnet (107) und der äußere Magnet (117) durch den ringförmigen Energieerzeugungsspulensatz (104) treten, so dass der ringförmige Energieerzeugungsspulensatz (104) Energie erzeugen kann;
einen Gleichrichtungs- und Ladungsschaltkreis (300), der durch elektromechanische und elektronische Festkörperkomponenten und Gleichrichtungsvorrichtungen gebildet ist und zum Gleichrichten der elektrischen Energie, die von dem ringförmigen Energieerzeugungsspulensatz (104) erzeugt wird, und anschließenden Einspeisen der elektrischen Energie in die Energiespeichervorrichtung (310) vorgesehen ist;
eine Energiespeichervorrichtung (310), die durch eine wiederaufladbare Sekundärbatterie oder einen Superkondensator oder Kondensator gebildet ist und zum Speichern der elektrischen Energie vom Gleichrichtungs- und Ladungsschaltkreis (300) oder der elektrische Energie, die von dem Anoden-Ausgangs-/Eingangsanschluss (410) und dem Kathoden-Ausgangs-/Eingangsanschluss (420) eingespeist wird, vorgesehen ist;
einen Anoden-Ausgangs-/Eingangsanschluss (410), der durch eine elektrisch leitende Anschlusskopf- oder Anschluss- oder Stecker- oder Buchsenstruktur gebildet ist und in dem Gehäuse (100) installiert ist und mit dem Anodenanschluss des Gleichrichtungs- und Ladungsschaltkreises (300) verbunden ist, um elektrische Energie nach außen auszugeben oder einzuspeisen;
einen Kathoden-Ausgangs-/Eingangsanschluss (420), der durch eine elektrisch leitende Anschlusskopf- oder Anschluss- oder Stecker- oder Buchsenstruktur gebildet ist und in dem Gehäuse (100) installiert ist und mit dem Kathodenanschluss des Gleichrichtungs- und Ladungsschaltkreises (300) verbunden ist, um elektrische Energie nach außen auszugeben oder einzuspeisen;
wobei ein zylinderförmiger Raum (114) im Inneren des Gehäuses vorgesehen ist, um den Außenumfang der Bewegungsblockbaugruppe (106) aufzunehmen und die relative Axialverschiebung zu ermöglichen, und wobei ein zweites Pufferelement (113) zwischen der Bewegungsblockbaugruppe (106) und dem zylinderförmiger Raum (114) im Inneren des Gehäuses (100) installiert ist, um als ein Puffer zu dienen, wenn die Bewegungsblockbaugruppe (106) die Axialverschiebung vollzieht;
und wobei Magnetpolflächen des säulenförmige Magnets (107) und des äußeren Magnets (117) die gleiche Polarität relativ zum ringförmigen Energieerzeugungsspulensatz (104) aufweisen.

3. Energiespeichervorrichtung basierend auf Energieerzeugung durch Vibration, ausgerüstet mit einem magnetischen Bewegungsblock, der einen inneren säulenförmigen Abschnitt und einen äußeren ringförmigen Abschnitt aufweist, nach Anspruch 2, wobei die Magnetpolflächen des säulenförmigen Magnets (107) und des äußeren Magnets (117) unterschiedliche Polaritäten relativ zum ringförmigen Energieerzeugungsspulensatz (104) aufweisen.

4. Energiespeichervorrichtung basierend auf Energieerzeugung durch Vibration, ausgerüstet mit einem magnetischen Bewegungsblock, der einen inneren säulenförmigen Abschnitt und einen äußeren ringförmigen Abschnitt aufweist, nach Anspruch 1, wobei die Energiespeichervorrichtung einen ringförmigen Energieerzeugungsspulensatz und einen weiteren ringförmigen Energieerzeugungsspulensatz (204) umfasst, der axial zum ringförmigen Energieerzeugungsspulensatz (104) versetzt ist, wobei das Innere der ringförmigen Energieerzeugungsspulensätze (104), (204) an die säulenförmigen Magnete (107), (207) gekoppelt ist und das Äußere derselben an die äußeren magnetischen leitfähigen Elemente (108), (208) gekoppelt ist, wobei die Energiespeichervorrichtung ferner Folgendes umfasst:
ein Gehäuse (100), das gebildet ist aus einem Material mit schlechter magnetischer Leitfähigkeit und schlechter elektrischer Leitfähigkeit und in der Form eines Hohlzylinders gebildet ist, wobei sich ein inneres Ende nach innen erstreckt und einen rohrförmigen ringförmigen Spulensatzsitz (101) bildet, wobei sein distales Ende für eine Verbindung mit dem ringförmigen Energieerzeugungsspulensatz (104) verlängert ist, und kombiniert mit einem weiteren rohrförmigen ringförmigen Spulensatzunterteilungssitz (201), der verlängert mit dem ringförmigen Energieerzeugungsspulensatz (204) verbunden ist, wobei ein ringförmiger Raum (103) zwischen dem rohrförmigen ringförmigen Spulensatzsitz (101) und der Innenbohrung des Gehäuse (100) gebildet ist und die Mitte des rohrförmigen ringförmigen Spulensatzsitzes (101) mit einem Rundraum (102) gebildet ist, und wobei die ringförmigen Energieerzeugungsspulensätze (104), (204) parallel oder in Reihe verbunden sind, derart, dass die Spannung sich während der Energieerzeugung akkumulieren kann, und die ringförmigen Energieerzeugungsspulensätze (104), (204) jeweils mit einem Ausgangsdraht (105) zum Ausgeben der elektrischen Energie, die von den ringförmigen Energieerzeugungsspulensätzen (104), (204) erzeugt wird, an einen Gleichrichtungs- und Ladungsschaltkreis (300) installiert sind, wobei die Anode des Gleichrichtungs- und Ladungsschaltkreises (300) mit der Anode einer Energiespeichervorrichtung (310) und mit einem Anoden-Ausgangs-/Eingangsanschluss (410) verbunden ist, der im Gehäuse (100) installiert ist, und wobei die Kathode des Gleichrichtungs- und Ladungsschaltkreises mit der Kathode der Energiespeichervorrichtung (310) und einem Kathoden-Ausgangs-/Eingangsanschluss (420) verbunden ist, der im Gehäuse (100) installiert ist;
eine Bewegungsblockbaugruppe (106), die aus einem Material mit schlechter magnetischer Leitfähigkeit und schlechter elektrischer Leitfähigkeit gebildet ist und eine becherförmige Struktur zum Kombinieren mit dem äußeren magnetischen leitfähigen Element (108) aufweist, und einen Unterteilungsring mit becherförmiger Struktur (210), der verlängert mit einem weiteren äußeren magnetischen leitfähigen Element (208) kombiniert ist, und eine Mittelsäule des Bewegungsblocks (109) in der Mitte der becherförmigen Struktur zum Kombinieren mit dem säulenförmigen Magnet (107) und eine weitere Mittelsäule des Bewegungsblocks (209), die verlängert mit einem weiteren säulenförmigen Magnet (207) kombiniert ist, wobei der Umfang der Mittelsäule des Bewegungsblocks (109) und die becherförmige Struktur des Bewegungsblocks (110) einen inneren ringförmigen Raum (111) zum Aufnehmen der ringförmigen Energieerzeugungsspulensätze (104), (204) und des weiteren rohrförmigen ringförmigen Spulensatzunterteilungssitzes (201) und des rohrförmigen ringförmigen Spulensatzsitzes (101) bilden und das Vollziehen der relativen Axialverschiebung ermöglichen, und wobei der rohrförmige ringförmige Spulensatzsitz (101) und der Rundraum (102) des weiteren rohrförmigen ringförmigen Spulensatzunterteilungssitzes (201) zum Aufnehmen der säulenförmigen Magnete (107), (207) und der Mittelsäule der Bewegungsblöcke (109), (209) vorgesehen sind und es ermöglichen, dass die Bewegungsblöcke und die Spulensätze die relative Axialverschiebung vollziehen;
ein erstes Pufferelement (112), das zwischen dem Rundraum (102) des rohrförmigen ringförmige Spulensatzsitzes (101) und der Innenwand des Gehäuses (100) installiert ist, um als ein Puffer zu dienen, während die Mittelsäulen (109), (209) und die säulenförmigen Magnete (107), (207) des Bewegungsblocks und die äußeren magnetischen leitfähigen Elemente (108), (208) die Axialverschiebung vollziehen;
wobei das Intervall des säulenförmigen Magnets (107) und des weiteren säulenförmigen Magnets (207), das durch die weitere Mittelsäule des Bewegungsblocks (209) unterteilt wird, und das Intervall des ringförmigen Energieerzeugungsspulensatzes (104) und des weiteren ringförmigen Energieerzeugungsspulensatzes (204), das durch den rohrförmigen ringförmigen Spulensatzunterteilungssitz (201) unterteilt wird, es ermöglichen, dass der ringförmige Energieerzeugungsspulensatz (104) und der weitere ringförmige Energieerzeugungsspulensatz (204) eine Spannung mit der gleichen Phase erzeugen, wobei beim axialen Hin- und Herbewegen des Bewegungsblocks der säulenförmige Magnet (107) und der säulenförmige Magnet (207) und das äußere magnetische leitfähige Element (108) und das äußere magnetische leitfähige Element (208) durch den ringförmigen Energieerzeugungsspulensatz (104) und den weiteren ringförmigen Energieerzeugungsspulensatz (204) treten, um Energie zu erzeugen;
einen Gleichrichtungs- und Ladungsschaltkreis (300), der durch elektromechanische und elektronische Festkörperkomponenten und Gleichrichtungsvorrichtungen gebildet ist und zum Gleichrichten der elektrischen Energie, die von dem ringförmigen Energieerzeugungsspulensatz (104) erzeugt wird, und anschließenden Einspeisen der elektrischen Energie in die Energiespeichervorrichtung (310) vorgesehen ist;
eine Energiespeichervorrichtung (310), die durch eine wiederaufladbare Sekundärbatterie oder einen Superkondensator oder Kondensator gebildet ist und zum Speichern der elektrischen Energie vom Gleichrichtungs- und Ladungsschaltkreis (300) oder der elektrische Energie, die von dem Anoden-Ausgangs-/Eingangsanschluss (410) und dem Kathoden-Ausgangs-/Eingangsanschluss (420) eingespeist wird, vorgesehen ist;
einen Anoden-Ausgangs-/Eingangsanschluss (410): der durch eine elektrisch leitende Anschlusskopf- oder Anschluss- oder Stecker- oder Buchsenstruktur gebildet ist und in dem Gehäuse (100) installiert ist und mit dem Anodenanschluss des Gleichrichtungs- und Ladungsschaltkreises (300) verbunden ist, um elektrische Energie nach außen auszugeben oder einzuspeisen;
einen Kathoden-Ausgangs-/Eingangsanschluss (420): der durch eine elektrisch leitende Anschlusskopf- oder Anschluss- oder Stecker- oder Buchsenstruktur gebildet ist und in dem Gehäuse (100) installiert ist und mit dem Kathodenanschluss des Gleichrichtungs- und Ladungsschaltkreises (300) verbunden ist, um elektrische Energie nach außen auszugeben oder einzuspeisen;
wobei ein zylinderförmiger Raum (114) im Inneren des Gehäuses (100) vorgesehen ist, um den Außenumfang der Bewegungsblockbaugruppe (106) aufzunehmen und die relative Axialverschiebung zu ermöglichen, und wobei ein zweites Pufferelement (113) zwischen der Bewegungsblockbaugruppe (106) und dem zylinderförmiger Raum (114) im Inneren des Gehäuses (100) installiert ist, um als ein Puffer zu dienen, wenn die Bewegungsblockbaugruppe (106) die Axialverschiebung vollzieht.

5. Energiespeichervorrichtung basierend auf Energieerzeugung durch Vibration, ausgerüstet mit einem magnetischen Bewegungsblock, der einen inneren säulenförmigen Abschnitt und einen äußeren ringförmigen Abschnitt aufweist, nach Anspruch 2, wobei die Energiespeichervorrichtung einen ringförmigen Energieerzeugungsspulensatz (104) und einen weiteren ringförmigen Energieerzeugungsspulensatz (204) der axial zum ringförmigen Energieerzeugungsspulensatz (104) versetzt ist, wobei das Innere der ringförmigen Energieerzeugungsspulensätze (104), (204) an säulenförmige Magnete (107, 207) gekoppelt ist und das Äußere der ringförmigen Energieerzeugungsspulensätze (104, 204) an die äußeren Magnete (117, 217) gekoppelt ist, die relativ mit der gleichen Polarität wie der säulenförmige Magnet (107) angeordnet sind, wobei die Energiespeichervorrichtung ferner Folgendes umfasst:
ein Gehäuse (100), das gebildet ist aus einem Material mit schlechter magnetischer Leitfähigkeit und schlechter elektrischer Leitfähigkeit und in der Form eines Hohlzylinders gebildet ist, wobei sich ein inneres Ende nach innen erstreckt und einen rohrförmigen ringförmigen Spulensatzsitz (101) bildet, wobei sein distales Ende für eine Verbindung mit dem ringförmigen Energieerzeugungsspulensatz (104) verlängert ist, und kombiniert mit einem weiteren rohrförmigen ringförmigen Spulensatzunterteilungssitz (201), der verlängert mit dem weiteren ringförmigen Energieerzeugungsspulensatz (204) verbunden ist, wobei ein ringförmiger Raum (103) zwischen dem rohrförmigen ringförmigen Spulensatzsitz (101) und der Innenbohrung des Gehäuse (100) gebildet ist und die Mitte des rohrförmigen ringförmigen Spulensatzsitzes (101) mit einem Rundraum (102) gebildet ist, und wobei die ringförmigen Energieerzeugungsspulensätze (104, 204) parallel oder in Reihe verbunden sind, derart, dass die Spannung sich während der Energieerzeugung akkumulieren kann, und die ringförmigen Energieerzeugungsspulensätze (104, 204) jeweils mit einem Ausgangsdraht (105) zum Ausgeben der elektrischen Energie, die von den ringförmigen Energieerzeugungsspulensätzen (104, 204) erzeugt wird, an einen Gleichrichtungs- und Ladungsschaltkreis (300) installiert sind, wobei die Anode des Gleichrichtungs- und Ladungsschaltkreises (300) mit der Anode einer Energiespeichervorrichtung (310) und mit einem Anoden-Ausgangs-/Eingangsanschluss (410) verbunden ist, der im Gehäuse (100) installiert ist, und wobei die Kathode des Gleichrichtungs- und Ladungsschaltkreises mit der Kathode der Energiespeichervorrichtung (310) und einem Kathoden-Ausgangs-/Eingangsanschluss (420) verbunden ist, der im Gehäuse (100) installiert ist;
eine Bewegungsblockbaugruppe (106), die aus einem Material mit schlechter magnetischer Leitfähigkeit und schlechter elektrischer Leitfähigkeit gebildet ist und eine becherförmige Struktur zum Kombinieren mit dem Magnet (117) aufweist, und einen Unterteilungsring mit becherförmiger Struktur (210), der verlängert mit einem weiteren äußeren Magnet (217) kombiniert ist, und eine Mittelsäule (109) in der Mitte der becherförmigen Struktur zum Kombinieren mit dem säulenförmigen Magnet (107) und eine weitere Mittelsäule des Bewegungsblocks (209), die verlängert mit einem weiteren säulenförmigen Magnet (207) kombiniert ist, wobei der Umfang der Mittelsäule des Bewegungsblocks (109) und die becherförmige Struktur des Bewegungsblocks (110) einen inneren ringförmigen Raum (111) zum Aufnehmen der ringförmigen Energieerzeugungsspulensätze (104, 204) und des weiteren rohrförmigen ringförmigen Spulensatzunterteilungssitzes (201) und des rohrförmigen ringförmigen Spulensatzsitzes (101) bilden und das Vollziehen der relativen Axialverschiebung ermöglichen, und wobei der rohrförmige ringförmige Spulensatzsitz (101) und der Rundraum (102) des weiteren rohrförmigen ringförmigen Spulensatzunterteilungssitzes (201) zum Aufnehmen der säulenförmigen Magnete (107, 207) und der Mittelsäule der Bewegungsblöcke (109, 209) vorgesehen sind und es ermöglichen, dass die Bewegungsblöcke und die Spulensätze die relative Axialverschiebung vollziehen; ein erstes Pufferelement (112), das zwischen dem Rundraum (102) des rohrförmigen ringförmigen Spulensatzsitzes (101) und der Innenwand des Gehäuses (100) installiert ist, um als ein Puffer zu dienen, während die Mittelsäulen (109), (209) und die säulenförmigen Magnete (107), (207) des Bewegungsblocks und die äußeren Magnete (117, 217) die Axialverschiebung vollziehen;
wobei das Intervall des säulenförmigen Magnets (107) und des weiteren säulenförmigen Magnets (207) und des äußeren Magnets (117) und des weiteren äußeren Magnets (217), das durch die weitere Mittelsäule des Bewegungsblocks (209) unterteilt wird, und das Intervall des ringförmigen Energieerzeugungsspulensatzes (104) und des ringförmigen Energieerzeugungsspulensatzes (204), das durch den rohrförmigen ringförmigen Spulensatzunterteilungssitz (201) unterteilt wird, es ermöglichen, dass der ringförmige Energieerzeugungsspulensatz (104) und der weitere ringförmige Energieerzeugungsspulensatz (204) die Spannung mit der gleichen Phase erzeugen, wobei beim axialen Hin- und Herbewegen des Bewegungsblocks der säulenförmige Magnet (107) und der säulenförmige Magnet (207) und der äußere Magnet (117) und der weitere äußere Magnet (217) durch den ringförmigen Energieerzeugungsspulensatz (104) und den weiteren ringförmigen Energieerzeugungsspulensatz (204) treten;
wobei der Gleichrichtungs- und Ladungsschaltkreis (300) elektromechanische und elektronische Festkörperkomponenten und Gleichrichtungsvorrichtungen umfasst und zum Gleichrichten der elektrischen Energie, die von dem ringförmigen Energieerzeugungsspulensatz (104) erzeugt wird, und anschließenden Einspeisen der elektrischen Energie in die Energiespeichervorrichtung (310) vorgesehen ist;
eine Energiespeichervorrichtung (310): die durch eine wiederaufladbare Sekundärbatterie oder einen Superkondensator oder Kondensator gebildet ist und zum Speichern der elektrischen Energie vom Gleichrichtungs- und Ladungsschaltkreis (300) oder der elektrische Energie, die von dem Anoden-Ausgangs-/Eingangsanschluss (410) und dem Kathoden-Ausgangs-/Eingangsanschluss (420) eingespeist wird, vorgesehen ist;
einen Anoden-Ausgangs-/Eingangsanschluss (410): der durch eine elektrisch leitende Anschlusskopf- oder Anschluss- oder Stecker- oder Buchsenstruktur gebildet ist und in dem Gehäuse (100) installiert ist und mit dem Anodenanschluss des Gleichrichtungs- und Ladungsschaltkreises (300) verbunden ist, um elektrische Energie nach außen auszugeben oder einzuspeisen;
einen Kathoden-Ausgangs-/Eingangsanschluss (420): der durch eine elektrisch leitende Anschlusskopf- oder Anschluss- oder Stecker- oder Buchsenstruktur gebildet ist und in dem Gehäuse (100) installiert ist und mit dem Kathodenanschluss des Gleichrichtungs- und Ladungsschaltkreises (300) verbunden ist, um elektrische Energie nach außen auszugeben oder einzuspeisen;
wobei ein zylinderförmiger Raum (114) im Inneren des Gehäuses (100) vorgesehen ist, um den Außenumfang der Bewegungsblockbaugruppe (106) aufzunehmen und das Vollziehen der relativen Axialverschiebung zu ermöglichen, und wobei ein zweites Pufferelement (113) zwischen der Bewegungsblockbaugruppe (106) und dem zylinderförmiger Raum (114) im Inneren des Gehäuses (100) installiert ist, um als ein Puffer zu dienen, wenn die Bewegungsblockbaugruppe (106) die Axialverschiebung vollzieht;
wobei die Magnetpolflächen des säulenförmigen Magnets (107) und des weiteren säulenförmige Magnets (207) relativ zum ringförmigen Energieerzeugungsspulensatz (104) und die Magnetpolflächen des äußeren Magnets (117) und des weiteren äußeren Magnets (217) relativ zum ringförmigen Energieerzeugungsspulensatz (204) die gleiche Polarität aufweisen.

6. Energiespeichervorrichtung basierend auf Energieerzeugung durch Vibration, ausgerüstet mit einem magnetischen Bewegungsblock, der einen inneren säulenförmigen Abschnitt und einen äußeren ringförmigen Abschnitt aufweist, nach Anspruch 5, wobei die Magnetpolflächen des säulenförmigen Magnets (107) und des äußeren Magnets (117) relativ zum ringförmigen Energieerzeugungsspulensatz (104) und die Magnetpolflächen des weiteren säulenförmigen Magnets (207) und des weiteren äußeren Magnets (217) relativ zum weiteren ringförmigen Energieerzeugungsspulensatz (204) unterschiedliche Polaritäten aufweisen.

7. Energiespeichervorrichtung basierend auf Energieerzeugung durch Vibration, ausgerüstet mit einem magnetischen Bewegungsblock, der einen inneren säulenförmigen Abschnitt und einen äußeren ringförmigen Abschnitt aufweist, nach Anspruch 4, wobei der säulenförmige Magnet (107), der säulenförmige Magnet (207), der ringförmigen Energieerzeugungsspulensatz (104), der ringförmigen Energieerzeugungsspulensatz (204), das äußere magnetische leitfähige Element (108) und das äußere magnetische leitfähige Element (208) alle aus zwei Einheiten oder mehr als zwei Einheiten gebildet sind.

8. Energiespeichervorrichtung basierend auf Energieerzeugung durch Vibration, ausgerüstet mit einem magnetischen Bewegungsblock, der einen inneren säulenförmigen Abschnitt und einen äußeren ringförmigen Abschnitt aufweist, nach Anspruch 5, wobei der säulenförmige Magnet (107), der säulenförmige Magnet (207), der ringförmigen Energieerzeugungsspulensatz (104), der ringförmigen Energieerzeugungsspulensatz (204), der äußere Magnet (117) und der äußere Magnet (217) alle aus zwei Einheiten oder mehr als zwei Einheiten gebildet sind.

9. Energiespeichervorrichtung basierend auf Energieerzeugung durch Vibration, ausgerüstet mit einem magnetischen Block, der einen inneren säulenförmigen Abschnitt und einen äußeren ringförmigen Abschnitt aufweist, nach Anspruch 6, wobei der säulenförmige Magnet (107), der säulenförmige Magnet (207), der ringförmigen Energieerzeugungsspulensatz (104), der ringförmigen Energieerzeugungsspulensatz (204), der äußere Magnet (117) und der äußere Magnet (217) alle aus zwei Einheiten oder mehr als zwei Einheiten gebildet sind.

10. Energiespeichervorrichtung basierend auf Energieerzeugung durch Vibration, ausgerüstet mit einem magnetischen Bewegungsblock, der einen inneren säulenförmigen Abschnitt und einen äußeren ringförmigen Abschnitt aufweist, nach Anspruch 4, wobei der säulenförmige Magnet (107), der säulenförmige Magnet (207), das äußere magnetische leitfähige Element (108) und das äußere magnetische leitfähige Element (208) alle aus zwei oder mehr als zwei Einheiten gebildet sind und der ringförmige Energieerzeugungsspulensatz (104) aus einer Einheit gebildet ist.

11. Energiespeichervorrichtung basierend auf Energieerzeugung durch Vibration, ausgerüstet mit einem magnetischen Bewegungsblock, der einen inneren säulenförmigen Abschnitt und einen äußeren ringförmigen Abschnitt aufweist, nach Anspruch 5, wobei der säulenförmige Magnet (107), der säulenförmige Magnet (207), der äußere Magnet (117) und der äußere Magnet (217) alle aus zwei oder mehr als zwei Einheiten gebildet sind und der ringförmige Energieerzeugungsspulensatz (104) aus einer Einheit gebildet ist.

12. Energiespeichervorrichtung basierend auf Energieerzeugung durch Vibration, ausgerüstet mit einem magnetischen Bewegungsblock, der einen inneren säulenförmigen Abschnitt und einen äußeren ringförmigen Abschnitt aufweist, nach Anspruch 6, wobei der säulenförmige Magnet (107), der säulenförmige Magnet (207), der äußere Magnet (117) und der äußere Magnet (217) alle aus zwei oder mehr als zwei Einheiten gebildet sind und der ringförmige Energieerzeugungsspulensatz (104) aus einer Einheit gebildet ist.

## Revendications

1. Dispositif de stockage d'énergie de génération d'énergie de type à vibration équipé d'un bloc de mouvement magnétique, le bloc de mouvement magnétique ayant une partie en colonne intérieure et une partie annulaire extérieure, comprenant un aimant en colonne (107) en forme de colonne ronde ayant différents pôles magnétiques dans la direction axiale, et un élément conducteur magnétique extérieur (108) à l'extérieur de et entourant l'aimant en colonne (107), l'aimant en colonne (107) et l'élément conducteur magnétique extérieur (108) étant agencés pour former un ensemble bloc de mouvement (106) et étant agencés de façon concentrique l'un par à l'autre pour former un trajet magnétique pour réaliser le déplacement axial synchrone, et le diamètre extérieur de l'aimant en colonne (107) est plus petit que le diamètre intérieur de l'élément conducteur magnétique extérieur (108) et formé avec un espace annulaire permettant à un ensemble bobine de génération d'énergie annulaire (104) de passer entre eux, de telle sorte que lorsque le bloc de mouvement magnétique et l'ensemble bobine (104) réalisent axialement des vibrations de déplacement axial alternatif relatif, l'ensemble bobine de génération d'énergie annulaire (104) génère de l'énergie électrique selon la loi de Lenz, et l'énergie électrique est stockée dans un dispositif de stockage d'énergie au moyen d'un circuit de redressement et de charge, le dispositif de stockage d'énergie comprenant une borne de sortie/entrée d'anode et une borne de sortie/entrée de cathode pour servir d'interfaces de sortie/entrée d'énergie électrique, le dispositif de stockage d'énergie comprenant en outre :
un boîtier (100) : qui est constitué d'un matériau ayant une faible conduction magnétique et une faible conduction électrique, formé selon une forme cylindrique creuse avec une extrémité intérieure étendue vers l'intérieur en formant un siège d'ensemble bobine annulaire tubulaire (101), avec son extrémité distale étendue pour être reliée à l'ensemble bobine de génération d'énergie annulaire (104), un espace annulaire (103) étant formé entre le siège d'ensemble bobine annulaire tubulaire (101) et le trou intérieur du boîtier (100), et le centre du siège d'ensemble bobine annulaire tubulaire (101) étant formé avec un espace rond (102), et l'ensemble bobine de génération d'énergie annulaire (104) étant installé avec un fil de sortie (105) pour délivrer en sortie l'énergie électrique générée par l'ensemble bobine de génération d'énergie annulaire (104) vers un circuit de redressement et de charge (300), l'anode du circuit de redressement et de charge (300) étant reliée à l'anode d'un dispositif de stockage d'énergie (310) et à une borne de sortie/entrée d'anode (410) installée dans le boîtier (100), et la cathode du circuit de redressement et de charge étant reliée à la cathode du dispositif de stockage d'énergie (310) et à une borne de sortie/entrée de cathode (420) installée dans le boîtier (100) ;
un ensemble bloc de mouvement (106) qui est constitué d'un matériau ayant une faible conduction magnétique et une faible conduction électrique, comprenant une structure en forme de gobelet pour combinaison à l'élément conducteur magnétique extérieur (108) et une colonne centrale au centre de la structure en forme de gobelet pour combinaison à l'aimant en colonne (107), la périphérie de la colonne centrale du bloc de mouvement (109) et la structure en forme de gobelet du bloc de mouvement (110) formant un espace annulaire intérieur (111) pour recevoir l'ensemble bobine de génération d'énergie annulaire (104) et le siège d'ensemble bobine annulaire tubulaire (101) et permettre au bloc de mouvement et à l'ensemble bobine de réaliser un déplacement axial relatif, et l'espace rond (102) du siège d'ensemble bobine annulaire tubulaire (101) étant prévu pour recevoir l'aimant en colonne (107) et la colonne centrale du bloc de mouvement (109) et permettre au bloc de mouvement et à l'ensemble bobine de réaliser un déplacement axial relatif ;
un premier élément tampon (112) installé entre l'espace rond (102) du siège d'ensemble bobine annulaire tubulaire (101) et la paroi intérieure du boîtier (100) pour servir de tampon tandis que la colonne centrale (109) et l'aimant en colonne (107) de l'ensemble bloc de mouvement (106) et de l'élément conducteur magnétique extérieur (108) réalisent un déplacement axial ; lors d'un déplacement alternatif axial du bloc de mouvement, l'aimant en colonne (107) et l'élément conducteur magnétique extérieur (108) passant à travers l'ensemble bobine de génération d'énergie annulaire (104), permettant à l'ensemble bobine de génération d'énergie annulaire (104) de générer de l'énergie ;
un circuit de redressement et de charge (300) qui est constitué de composants électromécaniques et électroniques solides et de dispositifs de redressement, et prévu pour redresser l'énergie électrique générée par l'ensemble bobine de génération d'énergie annulaire (104) puis injecter l'énergie électrique au dispositif de stockage d'énergie (310) ;
un dispositif de stockage d'énergie (310) qui est constitué d'une batterie secondaire rechargeable ou d'un super-condensateur ou d'un condensateur, et prévu pour stocker l'énergie électrique provenant du circuit de redressement et de charge (300) ou l'énergie électrique injectée à partir de la borne de sortie/entrée d'anode (410) et de la borne de sortie/entrée de cathode (420) ;
une borne de sortie/entrée d'anode (410) qui est constitué d'une tête de borne conductrice électrique ou d'une structure de borne ou fiche ou prise, et installée dans le boîtier (100) et reliée à la borne d'anode du circuit de redressement et de charge (300) pour délivrer en sortie ou injecter de l'énergie électrique à l'extérieur ;
une borne de sortie/entrée de cathode (420) qui est constitué d'une tête de borne conductrice électrique ou d'une structure de borne ou fiche ou prise, et installée dans le boîtier (100) et reliée à la borne de cathode du circuit de redressement et de charge (300) pour délivrer en sortie ou injecter de l'énergie électrique à l'extérieur ;
un espace cylindrique (114) étant prévu à l'intérieur du boîtier (100) pour recevoir la périphérie extérieur de l'ensemble bloc de mouvement (106) et permettre le déplacement axial relatif, et un second élément tampon (113) étant installé entre l'ensemble bloc de mouvement (106) et l'espace cylindrique (114) à l'intérieur du boîtier (100) pour servir tampon lorsque l'ensemble bloc de mouvement (106) réalise le déplacement axial.

2. Dispositif de stockage d'énergie de génération d'énergie de type à vibration équipé d'un bloc de mouvement magnétique, le bloc de mouvement magnétique ayant une partie en colonne intérieure et une partie annulaire extérieure selon la revendication 1, l'intérieur de l'ensemble bobine de génération d'énergie annulaire (104) étant couplé à l'aimant en colonne (107), et l'extérieur de l'ensemble bobine de génération d'énergie annulaire (104) étant couplé à un aimant extérieur (117) installé relativement avec la même polarité que l'aimant en colonne (107), l'aimant extérieur (117) remplaçant l'élément conducteur magnétique extérieur (108) de la revendication 1, le dispositif de stockage d'énergie comprenant :
un boîtier (100) : qui est constitué d'un matériau ayant une faible conduction magnétique et une faible conduction électrique, formé selon une forme cylindrique creuse avec une extrémité intérieure étendue vers l'intérieur en formant un siège d'ensemble bobine annulaire tubulaire (101), et avec son extrémité distale étendue pour être reliée à l'ensemble bobine de génération d'énergie annulaire (104), un espace annulaire (103) étant formé entre le siège d'ensemble bobine annulaire tubulaire (101) et le trou intérieur du boîtier (100), et le centre du siège d'ensemble bobine annulaire tubulaire (101) étant formé avec un espace rond (102), et l'ensemble bobine de génération d'énergie annulaire (104) étant installé avec un fil de sortie (105) pour délivrer en sortie de l'énergie électrique générée par l'ensemble bobine de génération d'énergie annulaire (104) vers un circuit de redressement et de charge (300), l'anode du circuit de redressement et de charge (300) étant reliée à l'anode du dispositif de stockage d'énergie (310) et à une borne de sortie/entrée d'anode (410) installée dans le boîtier (100), et la cathode du circuit de redressement et de charge (300) étant reliée à la cathode du dispositif de stockage d'énergie (310) et à une borne de sortie/entrée de cathode (420) installé dans le boîtier ;
un ensemble bloc de mouvement (106) qui est constitué d'un matériau ayant une faible conduction magnétique et une faible conduction électrique, comprenant une structure en forme de gobelet pour combinaison à l'aimant extérieur (117) et une colonne centrale au centre de la structure en forme de gobelet pour combinaison à l'aimant en colonne (107), la périphérie de la colonne centrale du bloc de mouvement (109) et la structure en forme de gobelet du bloc de mouvement (110) formant un espace annulaire intérieur (111) pour recevoir l'ensemble bobine de génération d'énergie annulaire (104) et le siège d'ensemble bobine annulaire tubulaire (101) et permettre au bloc de mouvement et à l'ensemble bobine de réaliser un déplacement axial relatif, et l'espace rond (102) du siège d'ensemble bobine annulaire tubulaire (101) étant prévu pour recevoir l'aimant en colonne (107) et la colonne centrale du bloc de mouvement (109) et permettre au bloc de mouvement et à l'ensemble bobine de réaliser un déplacement axial relatif ;
un premier élément tampon (112) installé entre l'espace rond (102) du siège d'ensemble bobine annulaire tubulaire (101) et la paroi intérieure du boîtier (100) pour servir de tampon tandis que la colonne centrale (109) et l'aimant en colonne (107) du bloc de mouvement et de l'aimant extérieur (117) réalisent un déplacement axial ;
lors d'un déplacement alternatif axial du bloc de mouvement, l'aimant en colonne (107) et l'aimant extérieur (117) passant à travers l'ensemble bobine de génération d'énergie annulaire (104), permettant à l'ensemble bobine de génération d'énergie annulaire (104) de générer de l'énergie ;
un circuit de redressement et de charge (300) qui est constitué de composants électromécaniques et électroniques solides et de dispositifs de redressement, et prévu pour redresser l'énergie électrique générée par l'ensemble bobine de génération d'énergie annulaire (104) puis injecter l'énergie électrique au dispositif de stockage d'énergie (310) ;
un dispositif de stockage d'énergie (310) qui est constitué d'une batterie secondaire rechargeable ou d'un super-condensateur ou d'un condensateur, et prévu pour stocker l'énergie électrique provenant du circuit de redressement et de charge (300) ou l'énergie électrique injectée à partir de la borne de sortie/entrée d'anode (410) et de la borne de sortie/entrée de cathode (420) ;
une borne de sortie/entrée d'anode (410) qui est constituée d'une tête de borne conductrice électrique ou d'une structure de borne ou fiche ou prise, et installée dans le boîtier (100) et reliée à la borne d'anode du circuit de redressement et de charge (300) pour délivrer en sortie ou injecter de l'énergie électrique à l'extérieur ;
une borne de sortie/entrée de cathode (420) qui est constituée d'une tête de borne conductrice électrique ou d'une structure de borne ou fiche ou prise, et installée dans le boîtier (100) et reliée à la borne de cathode du circuit de redressement et de charge (300) pour délivrer en sortie ou injecter de l'énergie électrique à l'extérieur ;
un espace cylindrique (114) étant prévu à l'intérieur du boîtier pour recevoir la périphérie extérieure de l'ensemble bloc de mouvement (106) et permettre le déplacement axial relatif, et un second élément tampon (113) étant installé entre l'ensemble bloc de mouvement (106) et l'espace cylindrique (114) à l'intérieur du boîtier (100) pour servir de tampon lorsque l'ensemble bloc de mouvement (106) réalise le déplacement axial ;
et des surfaces de pôle magnétique de l'aimant en colonne (107) et de l'aimant extérieur (117) par rapport à l'ensemble bobine de génération d'énergie annulaire (104) ayant la même polarité.

3. Dispositif de stockage d'énergie de génération d'énergie de type à vibration équipé d'un bloc de mouvement magnétique ayant une partie en colonne intérieure et une partie annulaire extérieure selon la revendication 2, dans lequel les surfaces de pôle magnétique de l'aimant en colonne (107) et de l'aimant extérieur (117) par rapport à l'ensemble bobine de génération d'énergie annulaire (104) ont des polarités différentes.

4. Dispositif de stockage d'énergie de génération d'énergie de type à vibration équipé d'un bloc de mouvement magnétique ayant une colonne intérieure et une partie annulaire extérieure selon la revendication 1, dans lequel le dispositif de stockage d'énergie comprend un ensemble bobine de génération d'énergie annulaire et un ensemble bobine supplémentaire de génération d'énergie annulaire (204) décalé axialement par rapport à l'ensemble bobine de génération d'énergie annulaire (104), l'intérieur des ensembles bobines de génération d'énergie annulaires (104), (204) étant couplé aux aimants en colonne (107), (207), et l'extérieur de ceux-ci étant couplé aux éléments conducteurs magnétiques extérieurs (108), (208), le dispositif de stockage d'énergie comprenant en outre :
un boîtier (100) qui est constitué d'un matériau ayant une faible conduction magnétique et une faible conduction électrique, formé selon une forme cylindrique creuse avec une extrémité intérieure étendue vers l'intérieur en formant un siège d'ensemble bobine annulaire tubulaire (101), et avec son extrémité distale étendue pour être reliée à l'ensemble bobine de génération d'énergie annulaire (104), et étant combinée à un siège supplémentaire de séparation tubulaire d'ensemble bobine annulaire (201) relié par extension à l'ensemble bobine de génération d'énergie annulaire (204), un espace annulaire (103) étant formé entre le siège d'ensemble bobine annulaire tubulaire (101) et le trou intérieur du boîtier (100), et le centre du siège d'ensemble bobine annulaire tubulaire (101) étant formé avec un espace rond (102), et les ensembles bobines de génération d'énergie annulaires (104), (204) étant reliés en parallèle ou en série de telle sorte que la tension peut s'accumuler pendant la génération d'énergie, et les ensembles bobines de génération d'énergie annulaires (104), (204) étant chacun installés avec un fil de sortie (105) pour délivrer en sortie l'énergie électrique générée par les ensembles bobines de génération d'énergie annulaires (104), (204) vers un circuit de redressement et de charge (300), l'anode du circuit de redressement et de charge (300) étant reliée à l'anode d'un dispositif de stockage d'énergie (310) et à une borne de sortie/entrée d'anode (410) installée dans le boîtier (100), et la cathode du circuit de redressement et de charge étant reliée à la cathode du dispositif de stockage d'énergie (310) et à une borne de sortie/entrée de cathode (420) installée dans le boîtier (100) ;
un ensemble bloc de mouvement (206) qui est constitué d'un matériau ayant une faible conduction magnétique et une faible conduction électrique, comprenant une structure en forme de gobelet pour combinaison à l'élément conducteur magnétique extérieur (108), et une bague de séparation de structure en forme de gobelet (210) combinée par extension à un élément conducteur magnétique extérieur supplémentaire (208), et une colonne centrale de bloc de mouvement (109) au centre de la structure en forme de gobelet pour combinaison à l'aimant en colonne (107), et une colonne centrale supplémentaire de bloc de mouvement (209) combinée par extension à un aimant en colonne supplémentaire (207), la périphérie de la colonne centrale du bloc de mouvement (109) et la structure en forme de gobelet du bloc de mouvement (110) formant un espace annulaire intérieur (111) pour recevoir les ensembles bobines de génération d'énergie annulaires (104), (204) et le siège supplémentaire de séparation tubulaire d'ensemble bobine annulaire (201) et le siège d'ensemble bobine annulaire tubulaire (101) et permettre de réaliser un déplacement axial relatif, et le siège d'ensemble bobine annulaire tubulaire (101) et l'espace rond (102) du siège supplémentaire de séparation tubulaire d'ensemble bobine annulaire (201) étant prévus pour recevoir les aimants en colonne (107), (207) et la colonne centrale des blocs de mouvement (109), (209) et permettre aux blocs de mouvement et aux ensembles bobines de réaliser un déplacement axial relatif ;
un premier élément tampon (112) installé entre l'espace rond (102) du siège d'ensemble bobine annulaire tubulaire (101) et la paroi intérieure du boîtier (100) pour servir de tampon tandis que les colonnes centrales (109), (209) et les aimants en colonne (107), (207) du bloc de mouvement et des éléments conducteurs magnétiques extérieurs (108), (208) réalisent un déplacement axial ;
l'intervalle de l'aimant en colonne (107) et de l'aimant en colonne supplémentaire (207) séparés par la colonne centrale supplémentaire de bloc de mouvement (209), et l'intervalle de l'ensemble bobine de génération d'énergie annulaire (104) et de l'ensemble bobine supplémentaire de génération d'énergie annulaire (204) séparés par le siège de séparation d'ensemble bobine annulaire tubulaire (201) permettant à l'ensemble bobine de génération d'énergie annulaire (104) et à l'ensemble bobine supplémentaire de génération d'énergie annulaire (204) de générer une tension ayant la même phase, lors d'un déplacement alternatif axial du bloc de mouvement l'aimant en colonne (107) et l'aimant en colonne (207) et l'élément conducteur magnétique extérieur (108) et l'élément conducteur magnétique extérieur (208) passant à travers l'ensemble bobine de génération d'énergie annulaire (104) et l'ensemble bobine supplémentaire de génération d'énergie annulaire (204) pour générer de l'énergie ;
un circuit de redressement et de charge (300) qui est constitué de composants électromécaniques et électroniques solides et de dispositifs de redressement, et prévu pour redresser l'énergie électrique générée par l'ensemble bobine de génération d'énergie annulaire (104) puis injecter l'énergie électrique au dispositif de stockage d'énergie (310) ;
un dispositif de stockage d'énergie (310) qui est constitué d'une batterie secondaire rechargeable ou d'un super-condensateur ou d'un condensateur, et prévu pour stocker l'énergie électrique provenant du circuit de redressement et de charge (300) ou l'énergie électrique injectée à partir de la borne de sortie/entrée d'anode (410) et de la borne de sortie/entrée de cathode (420) ;
une borne de sortie/entrée d'anode (410) : qui est constituée d'une tête de borne conductrice électrique ou d'une structure de borne ou fiche ou prise, et installée dans le boîtier (100) et reliée à la borne d'anode du circuit de redressement et de charge (300) pour délivrer en sortie ou injecter de l'énergie électrique à l'extérieur ;
une borne de sortie/entrée de cathode (420) : qui est constituée d'une tête de borne conductrice électrique ou d'une structure de borne ou fiche ou prise, et installée dans le boîtier (100) et reliée à la borne de cathode du circuit de redressement et de charge (300) pour délivrer en sortie ou injecter de l'énergie électrique à l'extérieur ;
un espace cylindrique (114) étant prévu à l'intérieur du boîtier (100) pour recevoir la périphérie extérieure de l'ensemble bloc de mouvement (106) et permettre le déplacement axial relatif, et un second élément tampon (113) étant installé entre l'ensemble bloc de mouvement (106) et l'espace cylindrique (114) à l'intérieur du boîtier (100) pour servir de tampon lorsque l'ensemble bloc de mouvement (106) réalise le déplacement axial.

5. Dispositif de stockage d'énergie de génération d'énergie de type à vibration équipé d'un bloc de mouvement magnétique ayant une partie en colonne intérieure et une partie annulaire extérieure selon la revendication 2, dans lequel le dispositif de stockage d'énergie comprend un ensemble bobine de génération d'énergie annulaire (104) et un ensemble bobine supplémentaire de génération d'énergie annulaire (204) décalé axialement par rapport à l'ensemble bobine de génération d'énergie annulaire (104), et l'intérieur des ensembles bobines de génération d'énergie annulaires (104), (204) étant couplé aux aimants en colonne (107, 207), et l'extérieur des ensembles bobines de génération d'énergie annulaires (104, 204) étant couplé aux aimants extérieurs (117, 217) agencés relativement avec la même polarité que l'aimant en colonne (107), le dispositif de stockage d'énergie comprenant en outre :
un boîtier (100) : qui est constitué d'un matériau ayant une faible conduction magnétique et une faible conduction électrique, formé selon une forme cylindrique creuse avec une extrémité intérieure étendue vers l'intérieur en formant un siège d'ensemble bobine annulaire tubulaire (101), et avec son extrémité distale étendue pour être reliée à l'ensemble bobine de génération d'énergie annulaire (104), et étant combinée à un siège supplémentaire de séparation tubulaire d'ensemble bobine annulaire (201) relié par extension à l'ensemble bobine supplémentaire de génération d'énergie annulaire (204), un espace annulaire (103) étant formé entre le siège d'ensemble bobine annulaire tubulaire (101) et le trou intérieur du boîtier (100), et le centre du siège d'ensemble bobine annulaire tubulaire (101) étant formé avec un espace rond (102), et les ensembles bobines de génération d'énergie annulaires (104, 204) étant reliés en parallèle ou en série de telle sorte que la tension peut s'accumuler pendant la génération d'énergie, et les ensembles bobines de génération d'énergie annulaires (104, 204) étant chacun installé avec un fil de sortie (105) pour délivrer en sortie l'énergie électrique générée par les ensembles bobines de génération d'énergie annulaires (104, 204) vers un circuit de redressement et de charge (300), l'anode du circuit de redressement et de charge (300) étant reliée à l'anode d'un dispositif de stockage d'énergie (310) et à une borne de sortie/entrée d'anode (410) installée dans le boîtier (100), et la cathode du circuit de redressement et de charge étant reliée à la cathode du dispositif de stockage d'énergie (310) et à une borne de sortie/entrée de cathode (420) installée dans le boîtier (100) ;
un ensemble bloc de mouvement (206) qui est constitué d'un matériau ayant une faible conduction magnétique et une faible conduction électrique, comprenant une structure en forme de gobelet pour combinaison à l'aimant extérieur (117), et une bague de séparation de structure en forme de gobelet (210) combinée par extension à l'aimant extérieur supplémentaire (217), et une colonne centrale (109) au centre de la structure en forme de gobelet pour combinaison à l'aimant en colonne (107) et une colonne centrale supplémentaire de bloc de mouvement (209) combinée par extension à un aimant en colonne supplémentaire (207), la périphérie de la colonne centrale du bloc de mouvement (109) et la structure en forme de gobelet du bloc de mouvement (110) formant un espace annulaire intérieur (111) pour recevoir les ensembles bobines de génération d'énergie annulaires (104, 204) et le siège supplémentaire de séparation tubulaire d'ensemble bobine annulaire (201) et le siège d'ensemble bobine annulaire tubulaire (101) et permettre de réaliser un déplacement axial relatif, et le siège d'ensemble bobine annulaire tubulaire (101) et l'espace rond (102) du siège supplémentaire de séparation tubulaire d'ensemble bobine annulaire (201) étant prévus pour recevoir les aimants en colonne (107, 207) et la colonne centrale des blocs de mouvement (109, 209) et permettre aux blocs de mouvement et aux ensembles bobines de réaliser un déplacement axial relatif ;
un premier élément tampon (112) installé entre l'espace rond (102) du siège d'ensemble bobine annulaire tubulaire (101) et la paroi intérieure du boîtier (100) pour servir de tampon tandis que les colonnes centrales (109), (209) et les aimants en colonne (107, 207) du bloc de mouvement et des aimants extérieurs (117, 217) réalisent un déplacement axial ;
l'intervalle de l'aimant en colonne (107) et de l'aimant en colonne supplémentaire (207) et de l'aimant extérieur (117) et de l'aimant extérieur supplémentaire (217) séparés par la colonne centrale supplémentaire de bloc de mouvement (209), et l'intervalle de l'ensemble bobine de génération d'énergie annulaire (104) et de l'ensemble bobine de génération d'énergie annulaire (204) séparés par le siège supplémentaire de séparation d'ensemble bobine annulaire tubulaire (201), permettant à l'ensemble bobine de génération d'énergie annulaire (104) et à l'ensemble bobine supplémentaire de génération d'énergie annulaire (204) de générer la tension ayant la même phase, lors d'un déplacement alternatif axial du bloc de mouvement l'aimant en colonne (107) et l'aimant en colonne supplémentaire (207) et l'aimant extérieur (117) et l'aimant extérieur supplémentaire (217) passant à travers l'ensemble bobine de génération d'énergie annulaire (104) et l'ensemble bobine supplémentaire de génération d'énergie annulaire (204) ;
le circuit de redressement et de charge (300) comprenant des composants électromécaniques et électroniques solides et des dispositifs de redressement, et étant prévu pour redresser l'énergie électrique générée par l'ensemble bobine de génération d'énergie annulaire (104) puis injecter l'énergie électrique au dispositif de stockage d'énergie (310) ;
un dispositif de stockage d'énergie (310) : qui est constitué d'une batterie secondaire rechargeable ou d'un super-condensateur ou d'un condensateur, et prévu pour stocker l'énergie électrique provenant du circuit de redressement et de charge (300) ou l'énergie électrique injectée à partir de la borne de sortie/entrée d'anode (410) et de la borne de sortie/entrée de cathode (420) ;
une borne de sortie/entrée d'anode (410) : qui est constituée d'une tête de borne conductrice électrique ou d'une structure de borne ou fiche ou prise, et installée dans le boîtier (100) et reliée à la borne d'anode du circuit de redressement et de charge (300) pour délivrer en sortie ou injecter de l'énergie électrique à l'extérieur ;
une borne de sortie/entrée de cathode (420) : qui est constituée d'une tête de borne conductrice électrique ou d'une structure de borne ou fiche ou prise, et installée dans le boîtier (100) et reliée à la borne de cathode du circuit de redressement et de charge (300) pour délivrer en sortie ou injecter de l'énergie électrique à l'extérieur ;
un espace cylindrique (114) étant prévu à l'intérieur du boîtier (100) pour recevoir la périphérie extérieure de l'ensemble bloc de mouvement (106) et permettre de réaliser un déplacement axial relatif, et un second élément tampon (113) étant installé entre l'ensemble bloc de mouvement (106) et l'espace cylindrique (114) à l'intérieur du boîtier (100) pour servir de tampon lorsque l'ensemble bloc de mouvement (106) réalise le déplacement axial ;
les surfaces de pôle magnétique de l'aimant en colonne (107) et de l'aimant en colonne supplémentaire (207) par rapport à l'ensemble bobine de génération d'énergie annulaire (104), et les surfaces de pôle magnétique de l'aimant extérieur (117) et de l'aimant extérieur supplémentaire (217) par rapport à l'ensemble bobine de génération d'énergie annulaire (204) ayant la même polarité.

6. Dispositif de stockage d'énergie de génération d'énergie de type à vibration équipé d'un bloc de mouvement magnétique ayant une partie en colonne intérieure et une partie annulaire extérieure selon la revendication 5, dans lequel les surfaces de pôle magnétique de l'aimant en colonne (107) et de l'aimant extérieur (117) par rapport à l'ensemble bobine de génération d'énergie annulaire (104), et les surfaces de pôle magnétique de l'aimant en colonne supplémentaire (207) et de l'aimant extérieur supplémentaire (217) par rapport à l'ensemble bobine supplémentaire de génération d'énergie annulaire (204), ont différentes polarités.

7. Dispositif de stockage d'énergie de génération d'énergie de type à vibration équipé d'un bloc de mouvement magnétique ayant une partie en colonne intérieure et une partie extérieure annulaire selon la revendication 4, dans lequel l'aimant en colonne (107), l'aimant en colonne (207), l'ensemble bobine de génération d'énergie annulaire (104), l'ensemble bobine de génération d'énergie annulaire (204), l'élément conducteur magnétique extérieur (108) et l'élément conducteur magnétique extérieur (208) sont tous composés de deux unités ou de plus de deux unités.

8. Dispositif de stockage d'énergie de génération d'énergie de type à vibration équipé d'un bloc de mouvement magnétique ayant une partie en colonne inférieure et une partie annulaire extérieure selon la revendication 5, dans lequel l'aimant en colonne (107), l'aimant en colonne (207), l'ensemble bobine de génération d'énergie annulaire (104), l'ensemble bobine de génération d'énergie annulaire (204), l'aimant extérieur (117) et l'aimant extérieur (217) sont tous composés de deux unités ou de plus de deux unités.

9. Dispositif de stockage d'énergie de génération d'énergie de type à vibration équipé d'un bloc de mouvement magnétique ayant une partie en colonne intérieure et une partie annulaire extérieure selon la revendication 6, dans lequel l'aimant en colonne (107), l'aimant en colonne (207), l'ensemble bobine de génération d'énergie annulaire (104), l'ensemble bobine de génération d'énergie annulaire (204), l'aimant extérieur (117) et l'aimant extérieur (217) sont tous composés de deux unités ou de plus de deux unités.

10. Dispositif de stockage d'énergie de génération d'énergie de type à vibration équipé d'un bloc de mouvement magnétique ayant une partie en colonne intérieure et une partie annulaire extérieure selon la revendication 4, dans lequel l'aimant en colonne (107), l'aimant en colonne (207), l'élément conducteur magnétique extérieur (108) et l'élément conducteur magnétique extérieur (208) sont tous composés de deux unités ou de plus de deux unités, et l'ensemble bobine de génération d'énergie annulaire (104) est composé d'une unité.

11. Dispositif de stockage d'énergie de génération d'énergie de type à vibration équipé d'un bloc de mouvement magnétique ayant une partie en colonne intérieure et une partie annulaire extérieure selon la revendication 5, dans lequel l'aimant en colonne (107), l'aimant en colonne (207), l'aimant extérieur (117) et l'aimant extérieur (217) sont tous composés de deux unités ou de plus de deux unités, et l'ensemble bobine de génération d'énergie annulaire (104) est composé d'une unité.

12. Dispositif de stockage d'énergie de génération d'énergie de type à vibration équipé d'un bloc de mouvement magnétique ayant une partie en colonne intérieure et une partie annulaire extérieure selon la revendication 6, dans lequel l'aimant en colonne (107), l'aimant en colonne (207), l'aimant extérieur (117) et l'aimant extérieur (217) sont tous composés de deux unités ou de plus de deux unités, et l'ensemble bobine de génération d'énergie annulaire (104) est composé d'une unité.
